(19) Europäisches Patentamt
European Patent Office
Office européen des brevets

(11) **EP 3 820 939 B1**

(12) **EUROPEAN PATENT SPECIFICATION**

(45) Date of publication and mention of the grant of the patent:
**05.06.2024 Bulletin 2024/23**

(21) Application number: **19737537.1**

(22) Date of filing: **10.07.2019**

(51) International Patent Classification (IPC):
***C08L 23/12*** *(2006.01)*

(52) Cooperative Patent Classification (CPC):
(C-Sets available)
**C08L 23/12; C08F 210/06; C08L 23/16;**
C08L 2201/10; C08L 2205/03; C08L 2205/24;
C08L 2207/02 (Cont.)

(86) International application number:
**PCT/EP2019/068486**

(87) International publication number:
**WO 2020/011825 (16.01.2020 Gazette 2020/03)**

(54) **HETEROPHASIC POLYPROPYLENE COMPOSITION WITH IMPROVED BALANCE OF PROPERTIES**

HETEROPHASISCHE POLYPROPYLENZUSAMMENSETZUNG MIT VERBESSERTEM EIGENSCHAFTSGLEICHGEWICHT

COMPOSITION DE POLYPROPYLÈNE HÉTÉROPHASIQUE PRÉSENTANT UN MEILLEUR ÉQUILIBRE DE PROPRIÉTÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2018 EP 18183456**

(43) Date of publication of application:
**19.05.2021 Bulletin 2021/20**

(73) Proprietor: **Borealis AG**
**1020 Vienna (AT)**

(72) Inventors:
- **GAHLEITNER, Markus**
  **4021 Linz (AT)**
- **WANG, Jingbo**
  **4021 Linz (AT)**
- **BERNREITNER, Klaus**
  **4021 Linz (AT)**
- **SCHWARZENBERGER, Simon**
  **4021 Linz (AT)**
- **RESCONI, Luigi**
  **4021 Linz (AT)**

(74) Representative: **Maiwald GmbH**
**Elisenhof**
**Elisenstraße 3**
**80335 München (DE)**

(56) References cited:
**EP-A1- 2 631 269** **EP-A1- 3 263 641**
**WO-A1-2015/082403**

- **GAHLEITNER* M ET AL: "Nucleation of Polypropylene Homo- and Copolymers", INTERNATIONAL POLYMER PROCES, MUNICH, DE, vol. XXVI, 1 January 2011 (2011-01-01), pages 2-20, XP008144573, ISSN: 0930-777X**
- **MARKUS GAHLEITNER ET AL: "Crystallinity and mechanical properties of PP-homopolymers as influenced by molecular structure and nucleation", JOURNAL OF APPLIED POLYMER SCIENCE, vol. 61, no. 4, 25 July 1996 (1996-07-25), pages 649-657, XP055447498, ISSN: 0021-8995, DOI: 10.1002/(SICI)1097-4628(19960725)61:4<649: :AID-APP8>3.0.CO;2-L**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

(Cont. next page)

(52) Cooperative Patent Classification (CPC): (Cont.)

C-Sets
**C08F 110/06, C08F 4/6492;**
**C08F 210/06, C08F 2/001;**
**C08L 23/12, C08L 23/08, C08L 23/20;**
**C08L 23/12, C08L 23/12, C08L 23/16**

## Description

The present invention is directed to a heterophasic polypropylene composition having an improved balance of desirable properties, i.e. high stiffness, high toughness, and high transparency. The present invention is further directed to a process for the preparation of the heterophasic polypropylene composition. The present invention is further directed to an article obtained by extrusion of the heterophasic polypropylene composition, and to a packaging article comprising the extruded article. Finally, the present invention is directed to the use of the heterophasic polypropylene composition for the production of extruded articles such as films or sheets.

Heterophasic polypropylene compositions are known in the art. They are composed of a continuous propylene homopolymer and/or propylene random copolymer phase acting as matrix in which an elastomeric phase, e.g. an ethylene-propylene rubber (EPR), is dispersed. Depending on the particular design of the heterophasic polypropylene composition various property profiles can be established. Factors of influence are the constitution of the matrix phase, the constitution of the dispersed phase, and the relative amounts thereof. As indicated already above, the matrix can be a propylene homopolymer and/or a propylene random copolymer. For the dispersed phase there are several options considering e.g. the type of monomer/comonomer, the amount of comonomer, and the molecular weight.

Heterophasic polypropylene compositions were designed to provide improved impact properties if compared to propylene random copolymers. The improved impact strength of heterophasic polypropylene compositions is attributed to the presence of the dispersed phase.

It is, however, a difficult task to provide a polypropylene composition with sufficient impact properties and good optical properties since light scattering occurs at the interface between the continuous matrix phase and the dispersed elastomeric phase. Accordingly, heterophasic polypropylene compositions appear somewhat opaque.

Also high stiffness is often desired. Given its high crystallinity, a propylene homopolymer (isotactic) has the highest stiffness. Insertion of a comonomer like in propylene ethylene random copolymers reduces stiffness by interrupting crystalline moieties but enhances impact properties. Insertion of a rubber phase resulting in a heterophasic polypropylene compositions further reduces stiffness but - as indicated already above - improves impact strength.

There is accordingly in general a conflict of aims if one wants at the same time provide a polypropylene composition with high stiffness, high impact strength (toughness), and good optical properties (high transparency).

Several attempts have been made to reduce light scattering at the interface and accordingly improve optical appearance. Similarly, several attempts have been made to balance or to tailor stiffness and impact strength.

EP 2 053 086 A1 discloses a propylene resin composition for packaging applications with excellent rigidity, transparency, impact resistance and blocking resistance. The propylene resin composition comprises a heterophasic propylene copolymer comprising a propylene polymer (A) having a melt flow rate $MFR_2$ of 0.1 to 40 g/10 min and a melting point of 145 to 170 °C, and a propylene-ethylene copolymer (B) having an ethylene content of 15 to less than 45 mol%, an intrinsic viscosity of 1.9 to 3.5 dl/g, a molecular weight distribution of more than 3.5, and an n-decane soluble part of not less than 95 wt%.

WO 2015/108634 A1 discloses a polypropylene impact copolymer with improved elongation and impact strength but still acceptable stiffness. The polypropylene impact copolymer has a melt flow rate $MFR_2$ of 10 to 50 g/10 min and an elongation at break of greater than 60 % and comprises a propylene homopolymer and 10 to 45 wt% of a propylene copolymer comprising 20 to 44 wt% ethylene, 1-butene, 1-hexene and/or 1-octene derived units.

EP 3 263 641 A1 discloses a fiber reinforced polypropylene composite comprising 50 to 94 wt.-% of a heterophasic propylene copolymer, 5 to 30 wt.-% of a cellulose-based fiber, and 1 to 20 wt.-% of a polymer-based fiber, wherein the heterophasic propylene copolymer comprises a semicrystalline polypropylene as a matrix in which an elastomeric propylene copolymer is dispersed.

There is, however, still a need for providing a polypropylene composition having an improved balance of desirable properties, i.e. high stiffness, high toughness, and high transparency.

The present invention is based on the finding that the object can be solved by provision of a heterophasic polypropylene composition produced in the presence of a single-site catalyst (SSC), the heterophasic polypropylene composition having particular limitations as regards the structure of the dispersed phase, and being nucleated by a polymeric nucleating agent.

Accordingly, the present invention is in one aspect directed to a heterophasic polypropylene composition (HECO) comprising a matrix phase (M) and an elastomeric phase dispersed therein, wherein the polypropylene composition comprises

(A) 60.0 to 95.0 wt%, based on the total weight of the composition, of a crystalline propylene homopolymer (H-PP) with a melting temperature $T_m$ measured by differential scanning calorimetry (DSC) of more than 155 °C,
(B) 5.0 to 20.0 wt%, based on the total weight of the composition, of an elastomeric ethylene-propylene rubber (EPR), and
(C) at least one polymeric nucleating agent, wherein the at least one polymeric nucleating agent comprises a polymer

selected from vinylcycloalkane polymer and vinylalkane polymer,

wherein the total sum of the components of the composition is 100 wt%, based on the total weight of the composition, wherein the crystalline propylene homopolymer (H-PP) and the elastomeric ethylene-propylene rubber (EPR) have been produced in the presence of a single-site catalyst (SSC),
wherein the heterophasic polypropylene composition is characterized by a soluble fraction (SF) determined in 1,2,4-trichlorobenzene at 40 °C in the range of 5.0 to 20.0 wt%, based on the total weight of the composition, and wherein the soluble fraction (SF) has an ethylene content C2(SF) in the range of 12.0 to 40.0 wt%.

The expression propylene homopolymer used herein relates to a polypropylene that consists substantially, i.e. at least 99.0 wt%, preferably of at least 99.5 wt%, more preferably of at least 99.8 wt%, of propylene units. In a preferred embodiment only propylene is used as monomer in polymerization. In a preferred embodiment only propylene units are detectable in the propylene homopolymer. Further, it is appreciated that the homopolymer of propylene is a linear polypropylene.

**Propylene Homopolymer (H-PP)**

The propylene homopolymer (H-PP) is part of the matrix phase (M) of the heterophasic polypropylene composition. Preferably, the matrix phase (M) comprises at least 90.0 wt%, more preferably at least 95.0 wt%, of the propylene homopolymer (H-PP). The matrix phase (M) may also consists of the propylene homopolymer (H-PP).

As indicated above, the amount of the propylene homopolymer (H-PP) in the heterophasic polypropylene composition (HECO) is 60.0 to 95.0 wt%. Preferably, the amount of the propylene homopolymer (H-PP) in the heterophasic polypropylene composition (HECO) is at least 70.0 wt%, more preferably at least 75.0 wt%, still more preferably at least 80.0 wt%, like at least 84.0 wt% or at least 88.0 wt%. Preferably, the amount of the propylene homopolymer (H-PP) in the heterophasic polypropylene composition (HECO) is 93.0 wt% or below, more preferably 92.0 wt% or below.

As indicated above, the melting temperature $T_m$ of the propylene homopolymer (H-PP) is higher than 155 °C, preferably higher than 156 °C, more preferably higher than 158 °C, thereby indicating high crystallinity. The melting temperature $T_m$ of the propylene homopolymer (H-PP) will be usually not higher than 170 °C.

The propylene homopolymer (H-PP) preferably has a melt flow rate $MFR_2$ of 2.5 to 300 g/10 min, more preferably of 4.0 to 200 g/10 min, still more preferably of 5.0 to 50 g/10 min.

As indicated above, the propylene homopolymer (H-PP) according to the present invention is produced in the presence of a single-site catalyst (SSC). Single-site catalysts (SSC) like metallocene catalysts are known to the skilled person. Suitable single-site catalysts (SSC) are e.g. disclosed in WO 2013/007650 A1 and in WO 2018/122134 A1.

The matrix phase (M) may comprise a further propylene homopolymer, e.g. a propylene homopolymer produced in the presence of a Ziegler-Natta catalyst, in an amount of 10.0 wt% or less, preferably 8.0 wt% or less, based on the total weight of the composition. For this further propylene homopolymer preferably the same limitations regarding melt flow rate $MFR_2$ and melting temperature apply.

**Elastomeric Ethylene-Propylene Rubber (EPR)**

The elastomeric ethylene-propylene rubber (EPR) is part of the elastomeric phase dispersed within the matrix phase (M). Preferably, the elastomeric phase comprises at least 80.0 wt%, more preferably at least 85.0 wt%, suitably at least 90.0 wt% or at least 95.0 wt%, of the elastomeric ethylene-propylene rubber (EPR). The elastomeric phase may also consist of the elastomeric ethylene-propylene rubber (EPR).

As indicated above, the amount of the elastomeric ethylene-propylene rubber (EPR) in the heterophasic polypropylene composition (HECO) is 5.0 to 20.0 wt%. Preferably, the amount of the elastomeric ethylene-propylene rubber (EPR) in the heterophasic polypropylene composition (HECO) is at least 7.0 wt%, more preferably at least 8.0 wt%. Preferably, the amount of the elastomeric ethylene-propylene rubber (EPR) in the heterophasic polypropylene composition (HECO) is 16.0 wt% or less, more preferably 14.0 wt% or less.

As indicated above, the elastomeric ethylene-propylene rubber (EPR) according to the present invention is produced in the presence of a single-site catalyst (SSC).

The elastomeric phase may comprise a further elastomeric ethylene-propylene rubber, e.g. an elastomeric ethylene-propylene rubber produced in the presence of a Ziegler-Natta catalyst, in an amount of 5.0 wt% or less, preferably 2.5 wt% or less, based on the total weight of the composition.

**Nucleating Agent**

As indicated above, the heterophasic polypropylene composition (HECO) according to the present invention

comprises at least one polymeric nucleating agent, wherein the at least one polymeric nucleating agent comprises a polymer selected from vinylcycloalkane polymer and vinylalkane polymer.

Nucleating agents and in particular polymeric nucleating agents are known in the art. The skilled person accordingly knows suitable polymeric nucleating agents as further defined above and knows suitable amounts to be added to a heterophasic polypropylene composition.

The amount of the at least one polymeric nucleating agent is preferably 0.0001 to 1.0 wt%, based on the total weight of the composition.

It is particularly preferred according to the present invention that the at least one polymeric nucleating agent comprises, even more preferably consists of, vinylcyclohexane polymer. This is also known as polyvinylcyclohexane (PVCH).

Hence, a preferred polymeric nucleating agent according to the present invention is polyvinylcyclohexane (PVCH).

The heterophasic polypropylene composition (HECO) according to the present invention may comprise two nucleating agents, wherein one nucleating agent is a polymeric nucleating agent as defined above, preferably polyvinylcyclohexane (PVCH), and the second nucleating agent is not a polymeric nucleating agent. The second nucleating agent must be promoting the $\alpha$-modification and/or the $\gamma$-modification of polypropylene, and is preferably a particulate nucleating agent. More preferably, the second nucleating agent is selected from the group consisting of salts of monocarboxylic acids and polycarboxylic acids, including dicarboxylic acids.

The amount of the second nucleating agent is preferably at least 0.01 wt%, more preferably at least 0.1 wt%, but not higher than 1.0 wt%, based on the total weight of the composition.

The total amount of all nucleating agents present is preferably 0.01 to 1.0 wt%, based on the total weight of the composition.

The at least one polymeric nucleating agent may be introduced either as a master batch by a compounding step subsequently to polymerization of the propylene homopolymer (H-PP) and the elastomeric ethylene-propylene rubber (EPR), or via a prepolymerization step prior to the first polymerization step wherein the polymeric nucleating agent is produced and a mixture of the single-site catalyst (SSC) and the polymeric nucleating agent is obtained. The polymerization of the propylene homopolymer (H-PP) and the elastomeric ethylene-propylene rubber (EPR) is then conducted in the presence of this mixture of the single-site catalyst (SSC) and the polymeric nucleating agent.

According to a preferred embodiment of the present invention, the polymeric nucleating agent is introduced together with 7.0 to 12.0 wt%, based on the total weight of the heterophasic polypropylene composition, of a Ziegler-Natta-based heterophasic polypropylene having a melting temperature $T_{m3}$ measured by differential scanning calorimetry (DSC) of higher than 155 °C and an $MFR_2$ (2.16 kg, 230 °C) measured according to ISO1133 in the range of 2.0 to 10.0 g/10 min.

## Heterophasic Polypropylene

The heterophasic polypropylene is part of the heterophasic polypropylene composition (HECO) according to the present invention. The heterophasic polypropylene consists of the matrix phase (M) and of at least part of the elastomeric phase dispersed therein, wherein this part of the elastomeric phase consists of elastomeric ethylene-propylene rubber, i.e. of the elastomeric ethylene-propylene rubber (EPR) which is produced in the presence of a single-site catalyst (SSC), and optionally of a further elastomeric ethylene-propylene rubber, e.g. an elastomeric ethylene-propylene rubber produced in the presence of a Ziegler-Natta catalyst.

The heterophasic polypropylene has a melt flow rate $MFR_2$ of preferably 2.0 to 10.0 g/10 min, more preferably of 2.2 to 8.0 g/10 min, still more preferably of 2.3 to 7.0 g/10 min.

The heterophasic polypropylene has an ethylene content of preferably 1.5 to 5.0 wt%, more preferably of 1.7 to 4.5 wt%, still more preferably of 1.9 to 4.0 wt%, based on the total weight of the composition.

## Polyethylene or Plastomer

The heterophasic polypropylene composition (HECO) according to the present invention may comprise a polyethylene and/or a plastomer in an amount of up to 20.0 wt%, preferably up to 15.0 wt%, more preferably up to 12.0 wt%, based on the total weight of the composition. If present, the amount of the polyethylene and/or a plastomer is preferably at least 4.0 wt%, like at least 5.0 wt%, based on the total weight of the composition. Accordingly, preferred ranges are 4.0 to 20 wt%, preferably 5.0 to 15.0 wt%, based on the total weight of the composition.

If present, the polyethylene and/or the plastomer preferably has a density in the range of 890 to 925 kg/m$^3$, preferably of 900 to 920 kg/m$^3$.

Accordingly, suitable classes of polyethylene are low density polyethylene (LDPE), linear low density polyethylene (LLDPE) and very low density polyethylene (VLDPE). These classes are known to the skilled person.

Plastomers are ethylene or propylene based copolymers, like copolymers of ethylene with 1-octene, or copolymers of propylene with ethylene, preferably produced by polymerization with a single-site catalyst. Plastomers are known to the skilled person.

If present, the polyethylene and/or the plastomer preferably has a melt flow rate $MFR_2$ (2.16 kg, 190 °C) measured according to ISO1133 in the range of 1.0 to 100 g/10 min, preferably of 1.2 to 80.0 g/10 min, more preferably of 1.3 to 70.0 g/10 min.

According to a preferred embodiment of the present invention, the polyethylene and/or plastomer is a linear low density polyethylene (LLDPE) which is present in an amount of 5.0 to 15.0 wt%, based on the total weight of the composition. In this regard it is furthermore preferred that the heterophasic polypropylene composition (HECO) has two melting temperatures $T_{m1}$ and $T_{m2}$ measured by differential scanning calorimetry (DSC) with $T_{m1}$ being higher than 155 °C and $T_{m2}$ being in the range of 60 to 125 °C.

**Heterophasic Polypropylene Composition (HECO)**

The heterophasic polypropylene composition (HECO) comprises a matrix phase (M) and an elastomeric phase dispersed therein. As indicated above, the propylene homopolymer (H-PP) is part of the matrix phase (M), while the elastomeric ethylene-propylene rubber (EPR) is part of the elastomeric phase. The heterophasic polypropylene composition (HECO) further comprises at least one polymeric nucleating agent as further defined above.

The heterophasic polypropylene composition (HECO) is preferably produced by sequential polymerization wherein in one step the propylene homopolymer (H-PP) is produced, and in a subsequent step the elastomeric ethylene-propylene rubber (EPR) is produced in the presence of the propylene homopolymer (H-PP). Accordingly, the elastomeric ethylene-propylene rubber (EPR), or the elastomeric fraction, respectively, is usually not present as a separate fraction. Since in a heterophasic polypropylene composition the matrix phase and the elastomeric phase usually cannot exactly be divided from each other, one cannot directly measure amount and properties of the elastomeric ethylene-propylene rubber (EPR), or the elastomeric phase, respectively.

In order to characterize the matrix phase and the elastomeric phase of a heterophasic polypropylene composition several methods are known. One method is the extraction of a xylene cold solubles (XCS) fraction, thus separating a xylene cold solubles (XCS) fraction from a xylene cold insoluble (XCI) fraction. It is known that the xylene cold solubles (XCS) fraction of a heterophasic polypropylene composition largely corresponds to the elastomeric phase. It may, however, contain small parts of the matrix phase, e.g. around 1.0 wt%. The xylene extraction is especially suitable for heterophasic polypropylene compositions with a highly crystalline matrix phase such as propylene homopolymer matrix phase as in the present invention.

Another method is the separation of a crystalline fraction and a soluble fraction with the CRYSTEX QC method using 1,2,4-trichlorobenzene (TCB) as solvent. This method is described below in the measurement methods section. In this method, a crystalline fraction (CF) and a soluble fraction (SF) are separated from each other. The crystalline fraction (CF) largely corresponds to the matrix phase and contains only a small part of the elastomeric phase, while the soluble fraction (SF) largely corresponds to the elastomeric phase and contains only a small part of the matrix phase.

Due to the differences in the separation methods using extraction by xylene and by 1,2,4-trichlorobenzene, the properties of XCS/XCI fractions on the one hand and soluble/crystalline (SF/CF) fractions on the other hand are not exactly the same, but are similar.

As indicated above, the heterophasic polypropylene composition (HECO) is characterized by a soluble fraction (SF) determined in 1,2,4-trichlorobenzene at 40 °C in the range of 5.0 to 20.0 wt%, based on the total weight of the composition, and the soluble fraction (SF) has an ethylene content C2(SF) in the range of 12.0 to 40.0 wt%.

Preferably, the amount of the soluble fraction (SF) of the heterophasic polypropylene composition (HECO) is at least 7.0 wt%, more preferably at least 8.0 wt%. Preferably, the amount of the soluble fraction (SF) of the heterophasic polypropylene composition (HECO) is 16.0 wt% or less, more preferably 14.0 wt% or less.

Preferably, the soluble fraction (SF) has an ethylene content C2(SF) of at least 14.0 wt%, more preferably of at least 15.0 wt%. Preferably, the soluble fraction (SF) has an ethylene content C2(SF) of 30.0 wt% or less, more preferably of 25.0 wt% or less.

Preferably, the intrinsic viscosity (IV) of the soluble fraction IV(SF) of the heterophasic polypropylene composition (HECO) is in the range of 1.0 to 3.0 dl/g, more preferably 1.2 to 2.5 dl/g, still more preferably 1.3 to 2.4 dl/g.

Correspondingly, the amount of the crystalline fraction (CF) of the heterophasic polypropylene composition (HECO) is in the range of 80.0 to 95.0 wt%, based on the total weight of the composition, preferably at least 84.0 wt%, more preferably at least 86.0 wt%. Preferably, the amount of the crystalline fraction (CF) of the heterophasic polypropylene composition (HECO) is 93.0 wt% or less, more preferably 92.0 wt% or less.

Preferably, the crystalline fraction (CF) has an ethylene content C2(CF) of 0.0 to 2.5 wt%, more preferably of 0.0 to 2.0 wt%, more preferably of 0.0 to 1.5 wt%.

Preferably, the ratio between the intrinsic viscosity (IV) of the soluble fraction IV(SF) and the intrinsic viscosity

(IV) of the crystalline fraction IV(CF) is in the range of 0.5 to 1.2, more preferably 0.6 to 1.1, still more preferably 0.7 to 1.0.

The heterophasic polypropylene composition (HECO) according to the present invention is preferably also characterized by a xylene cold solubles (XCS) fraction in the range of 5.0 to 20.0 wt%, based on the total weight of the composition.

The heterophasic polypropylene composition (HECO) according to the present invention is preferably also characterized by an ethylene content of the xylene cold solubles (XCS) fraction C2(XCS) in the range of 12.0 to 40.0 wt%.

The heterophasic polypropylene composition (HECO) according to the present invention is preferably also characterized by an intrinsic viscosity (IV) measured according to DIN ISO1628/1 (in decalin at 135 °C) of the xylene cold solubles (XCS) fraction IV(XCS) in the range of 1.0 to 3.0 dl/g.

Preferably, the heterophasic polypropylene composition (HECO) according to the present invention has a melt flow rate $MFR_2$ (2.16 kg, 230 °C) measured according to ISO1133 in the range of 2.0 to 10.0 g/10 min, more preferably of 2.2 to 8.0 g/10 min, still more preferably of 2.3 to 7.0 g/10 min.

It is furthermore preferred that the heterophasic polypropylene composition (HECO) has at least one melting temperature $T_{m1}$ measured by differential scanning calorimetry (DSC) with $T_{m1}$ being higher than 155 °C. The melting temperature $T_{m1}$ of the heterophasic polypropylene composition (HECO) will be usually not higher than 170 °C. Still preferred ranges are 156 to 167 °C or 158 to 165 °C.

In case the heterophasic polypropylene composition (HECO) according to the present invention comprises a linear low density polyethylene (LLDPE), which is present in an amount of 5.0 to 15.0 wt%, based on the total weight of the composition, it is furthermore preferred that the heterophasic polypropylene composition (HECO) has two melting temperatures $T_{m1}$ and $T_{m2}$ measured by differential scanning calorimetry (DSC) with $T_{m1}$ being higher than 155 °C and $T_{m2}$ being in the range of 60 to 125 °C.

Preferably, the heterophasic polypropylene composition (HECO) according to the present invention has a glass transition temperature $T_g$(PP) in the range of -1.0 to 2.0 °C and a glass transition temperature $T_g$(EPR) in the range of -50.0 to -30.0 °C.

The heterophasic polypropylene composition (HECO) according to the present invention has an improved balance of stiffness, toughness, and transparency.

Accordingly and preferably, the heterophasic polypropylene composition (HECO) according to the present invention has a haze measured according to ASTM D1033 on a 1.0 mm thick plaque of below 50%, more preferably in the range of 15 to 45%, still more preferably in the range of 17 to 40%.

Accordingly and preferably, the heterophasic polypropylene composition (HECO) according to the present invention has a Charpy notched impact strength NIS at +23 °C measured according to ISO 179 of at least 10.0 $kJ/m^2$, more preferably in the range of 14.0 to 75.0 $kJ/m^2$, still more preferably in the range of 16.5 to 70.0 $kJ/m^2$.

Accordingly and preferably, the heterophasic polypropylene composition (HECO) according to the present invention has a flexural modulus measured according to ISO 178 of at least 1300 MPa, like in the range of 1300 to 1700 MPa, more preferably in the range of 1350 to 1650 MPa.

Still more preferably, the heterophasic polypropylene composition (HECO) according to the present invention has a haze measured according to ASTM D1033 on a 1.0 mm thick plaque of below 50%, and a Charpy notched impact strength NIS at +23 °C measured according to ISO 179 of at least 10.0 $kJ/m^2$, and a flexural modulus measured according to ISO 178 of at least 1300 MPa.

The parameter OMA (opto-mechanical ability) is a measure of optical and mechanical performance. It is calculated as (flexural modulus /MPa $\times$ Charpy notched impact strength NIS at +23 °C /$kJ/m^2$)/(haze /%). It is preferred according to the present invention that OMA is at least 500, preferably in the range of 550 to 2500, more preferably in the range of 600 to 2200.

The heterophasic polypropylene composition (HECO) according to the present invention may comprise usual additives, preferably in a total amount of not more than 5.0 wt% based on the total weight of the composition.

The heterophasic polypropylene composition (HECO) according to the present invention may comprise an antioxidant, such as sterically hindered phenol, phosphorus-based antioxidant, sulphur-based antioxidant, nitrogen-based antioxidant, or mixtures thereof. In particular, a mixture of pentaerythritol tetrakis(3-(3,5-di-tert-butyl-4-hydroxyphenyl)propionate) and tris(2,4-di-tert-butylphenyl)phosphite may be used as antioxidant (Irganox B 215 or Irganox B 225).

The heterophasic polypropylene composition (HECO) according to the present invention may further comprise an antistatic agent, such as calcium stearate, sodium stearate or zinc stearate.

**Preparation of the Heterophasic Polypropylene Composition (HECO)**

The present invention is in a second aspect directed to a process for the preparation of the heterophasic polypropylene composition (HECO) according to the first aspect of the present invention described above, including all its preferred embodiments.

This process comprises polymerizing propylene in at least three polymerization steps in the presence of a single-site catalyst (SSC), wherein

a) in the first polymerization reactor (R1) propylene is polymerized to obtain a first propylene homopolymer fraction (H-PP1), said first propylene homopolymer fraction (H-PP1) is transferred to a second polymerization reactor (R2),
b) in the second polymerization reactor (R2) a second propylene homopolymer fraction (H-PP2) is produced, forming together with the first propylene homopolymer fraction (H-PP1) the propylene homopolymer (H-PP),
c) in the third polymerization reactor the elastomeric ethylene propylene rubber fraction (EPR) is produced in the presence of the propylene homopolymer (H-PP) which is produced in reaction steps a) and b), and
d) the at least one polymeric nucleating agent is introduced either

- as a master batch by a compounding step subsequently to polymerization step c), or
- via a prepolymerization step prior to the first polymerization step a) in a prepolymerization reactor (PR) wherein the polymeric nucleating agent is produced and a mixture of the single-site catalyst (SSC) and the polymeric nucleating agent is obtained, and, subsequent to the prepolymerization, the mixture of the single-site catalyst (SSC) and the polymeric nucleating agent produced in the prepolymerization reactor (PR) is transferred to the first reactor (R1).

The process may comprise adding suitable additives by compounding.

**Articles**

The present invention is in a third aspect directed to an article obtained by extrusion of the heterophasic polypropylene composition (HECO) according to the first aspect of the present invention described above, including all its preferred embodiments.
Extrusion of a heterophasic polypropylene composition (HECO) according to the present invention is conventional for the skilled person. Suitable extruders like a twin screw extruder may be applied.
Preferred articles are films and sheets.
The present invention is in a fourth aspect directed to a packaging article comprising the extruded article according to the third aspect of the present invention described above.

**Use of the Heterophasic Polypropylene copolymer Composition**

The present invention is in a fifth aspect directed to the use of the heterophasic polypropylene copolymer composition (HECO) according to the first aspect of the present invention described above, including all its preferred embodiments, for the production of extruded articles such as films or sheets. It is further directed at packaging systems for food and medical products based on such films or sheets.
In the following, the present invention is further illustrated by means of examples.

**EXAMPLES**

**1. Definitions/Measuring Methods**

The following definitions of terms and determination methods apply for the above general description of the invention as well as to the below examples unless otherwise defined.

**Ethylene Content**

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probe head at 125 °C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent {8}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bilevel WALTZ16 decoupling scheme {3, 4}. A total of 6144 (6k) transients

were acquired per spectra.

Quantitative $^{13}C\{^{1}H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed {7}.

The comonomer fraction was quantified using the method of Wang et. al. {6} through integration of multiple signals across the whole spectral region in the $^{13}C\{^{1}H\}$ spectra. This method was chosen for its robust nature and ability to account for the presence of regiodefects when needed. Integral regions were slightly adjusted to increase applicability across the whole range of encountered comonomer contents. For systems where only isolated ethylene in PPEPP sequences was observed the method of Wang et al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5\ (S\beta\beta + S\beta\gamma + S\beta\delta + 0.5(\ S\alpha\beta + S\alpha\gamma))$$

Through the use of this set of sites the corresponding integral equation becomes:

$$E = 0.5\ (I_H + I_G + 0.5(I_C + I_D))$$

using the same notation used in the article of Wang et al. {6}. Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06\ ) / (\ (fE * 28.06) + ((1\text{-}fE) * 42.08)\ )$$

Bibliographic references:


1) Busico, V., Cipullo, R., Prog. Polym. Sci. 26 (2001) 443.
2) Busico, V., Cipullo, R., Monaco, G., Vacatello, M., Segre, A.L., Macromolecules 30 (1997) 6251.
3) Zhou, Z., Kuemmerle, R., Qiu, X., Redwine, D., Cong, R., Taha, A., Baugh, D. Winniford, B., J. Mag. Reson. 187 (2007) 225.
4) Busico, V., Carbonniere, P., Cipullo, R., Pellecchia, R., Severn, J., Talarico, G., Macromol. Rapid Commun. 2007, 28, 1128.
5) Resconi, L., Cavallo, L., Fait, A., Piemontesi, F., Chem. Rev. 2000, 100, 1253.
6) Wang, W-J., Zhu, S., Macromolecules 33 (2000), 1157.
7) Cheng, H. N., Macromolecules 17 (1984), 1950.
8) Singh, G., Kothari, A., Gupta, V., Polymer Testing 28 5 (2009), 475.
9) Kakugo, M., Naito, Y., Mizunuma, K., Miyatake, T. Macromolecules 15 (1982) 1150.
10) Randall, J. Macromol. Sci., Rev. Macromol. Chem. Phys. 1989, C29, 201.
11) Resconi, L., Cavallo, L., Fait, A., Piemontesi, F., Chem. Rev. 2000, 100, 1253.


**Density**

Density is measured according to ISO 1183-1 - method A (2004). Sample preparation is done by compression moulding in accordance with ISO 1872-2:2007.

**Intrinsic Viscosity (IV)**

Intrinsic viscosity (IV) is measured according to DIN ISO 1628/1, October 1999 in decalin at 135 °C.

### Melt Flow Rate

Melt flow rate $MFR_2$ of polyethylene is determined according to ISO 1133 at 190 °C under a load of 2.16 kg. Melt flow rate $MFR_2$ of polypropylene is determined according to ISO 1133 at 230 °C under a load of 2.16 kg.

### Soluble and Crystalline Fraction (SF, CF)

The soluble fraction (SF) and the crystalline fraction (CF) of the composition as well as ethylene content and intrinsic viscosity of the respective fractions were analyzed by the CRYSTEX QC, Polymer Char (Valencia, Spain).

The crystalline and soluble fractions are separated through temperature cycles of dissolution at 160 °C, crystallization at 40 °C and re-dissolution in 1,2,4-trichlorobenzene (1,2,4-TCB) at 160 °C. Quantification of SF and CF and determination of ethylene content (C2) are achieved by means of an infrared detector (IR4) and an online 2-capillary viscometer which is used for the determination of the intrinsic viscosity (IV).

The IR4 detector is a multiple wavelength detector detecting IR absorbance at two different bands (CH3 and CH2) for the determination of the concentration and the ethylene content in ethylene-propylene copolymers. IR4 detector is calibrated with series of 8 ethylene-propylene copolymers with known ethylene content in the range of 2 wt% to 69 wt% (determined by $^{13}C$-NMR) and various concentration between 2 and 13 mg/ml for each used ethylene-propylene copolymer used for calibration.

The amounts of the soluble fraction (SF) and the crystalline fraction (CF) are correlated through the XS calibration to the "xylene cold soluble" (XCS) quantity and respectively xylene cold insoluble (XCI) fractions, determined according to standard gravimetric method as per ISO16152. XS calibration is achieved by testing various ethylene-propylene copolymers with XS content in the range 2-31 wt%. The intrinsic viscosity (IV) of the parent ethylene-propylene copolymer and its soluble and crystalline fractions are determined with a use of an online 2-capillary viscometer and is correlated to corresponding IV's determined by standard method in decalin according to ISO 1628. Calibration is achieved with various ethylene-propylene copolymers with IV = 2-4 dl/g.

A sample of the composition to be analyzed is weighed out in concentrations of 10 mg/ml to 20 mg/ml. After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 800 rpm.

A defined volume of the sample solution is injected into the TREF column filled with inert support (column filled with inert material e.g. glass beads) where the crystallization of the sample and separation of the soluble fraction from the crystalline part is taking place. This process is repeated two times. During the first injection the whole sample is measured at high temperature, determining the IV [dl/g] and the C2 [wt%] of the composition. During the second injection the soluble fraction (at low temperature) and the crystalline fraction (at high temperature) with the crystallization cycle are measured (wt% SF, wt% C2, IV).

(see Del Hierro, P.; Ortin, A.; Monrabal, B.; 'Soluble Fraction Analysis in polypropylene, The Column Advanstar Publications, February 2014. Pages 18-23).

### Xylene Cold Solubles (XCS)

The xylene cold solubles content is measured at 25 °C according to ISO 16152, first edition; 2005-07-01. The part which remains insoluble is the xylene cold insoluble (XCI) fraction.

### Glass Transition Temperature ($T_g$) and Storage Modulus (G')

The glass transition temperature $T_g$ and the storage modulus G'(23 °C) are determined by dynamic mechanical analysis (DMA) according to ISO 6721-7. The measurements are done in torsion mode on compression moulded samples ($40 \times 10 \times 1.0$ $mm^3$) between -100 °C and +150 °C with a heating rate of 2 °C/min and a frequency of 1 Hz.

### Melting and Crystallization Temperature ($T_m$, $T_c$), Melt Enthalpy ($H_m$)

Melting temperature ($T_m$), crystallization temperature ($T_c$), and melt enthalpy ($H_m$) are measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. The crystallization temperature ($T_c$) is determined from the cooling step, while melting temperature ($T_m$) and melting enthalpy ($H_m$) are determined from the second heating step. The crystallinity is calculated from the melting enthalpy by assuming an $H_m$-value of 209 J/g for a fully crystalline polypropylene (see Brandrup, J., Immergut, E. H., Eds. Polymer Handbook, 3rd ed. Wiley, New York, 1989; Chapter 3).

**Charpy Notched Impact Strength**

Charpy notched impact strength is determined according to ISO 179 / 1eA at 23 °C and at -20 °C by using injection moulded test specimens as described in EN ISO 1873-2 ($80 \times 10 \times 4$ mm$^3$).

**Flexural Modulus**

Flexural modulus is determined according to ISO 178:2010 / Amd.1:2013 on injection molded specimens of prepared in accordance with ISO 294-1:1996 ($80 \times 10 \times 4$ mm$^3$).

**Transparency, Haze and Clarity**

Transparency, haze and clarity were determined according to ASTM D1003-00 on injection molded plaques prepared in accordance with EN ISO 1873-2 using a melt temperature of 200 °C ($60 \times 60 \times 1.0$ mm$^3$).

**2. Examples**

***Preparation of Catalyst***

*Synthesis of Metallocene*

The following reagents were used:

2,6-Dimethylaniline (Acros), 1-bromo-3,5-dimethylbenzene (Acros), 1-bromo-3,5-di-tert-butylbenzene (Acros), bis(2,6-diisopropylphenyl)imidazolium chloride (Aldrich), triphenylphosphine (Acros), $NiCl_2$ (DME) (Aldrich), dichlorodimethylsilane (Merck), $ZrCl_4$ (Merck), $HfCl_4$, <1% Zr (Strem Chemicals), trimethylborate (Acros), $Pd(OAc)_2$ (Aldrich), $NaBH_4$ (Acros), 2.5 M nBuLi in hexanes (Chemetal), CuCN (Merck), magnesium turnings (Acros), silica gel 60, 40-63 μm (Merck), bromine (Merck), 96% sulfuric acid (Reachim), sodium nitrite (Merck), copper powder (Alfa), potassium hydroxide (Merck), $K_2CO_3$ (Merck), 12 M HCl (Reachim), TsOH (Aldrich), $MgSO_4$ (Merck), $Na_2CO_3$ (Merck), $Na_2SO_4$ (Akzo Nobel), methanol (Merck), diethyl ether (Merck), 1,2-dimethoxyethane (DME, Aldrich), 95% ethanol (Merck), dichloromethane (Merck), hexane (Merck), THF (Merck), and toluene (Merck) were used as received. Hexane, toluene and dichloromethane for organometallic synthesis were dried over molecular sieves 4A (Merck). Diethyl ether, THF, and 1,2-dimethoxyethane for organometallic synthesis were distilled over sodium benzophenoneketyl. $CDCl_3$ (Deutero GmbH) and $CD_2Cl_2$ (Deutero GmbH) were dried over molecular sieves 4A. 4-Bromo-6-tert-butyl-5-methoxy-2-methylindan-1-one was obtained as described in WO 2013/007650.

Steps of Synthesis:

*2-methyl-4-(3,5-dimethylphenyl)-5-methoxy-6-tert-butyl-indan-1-one*

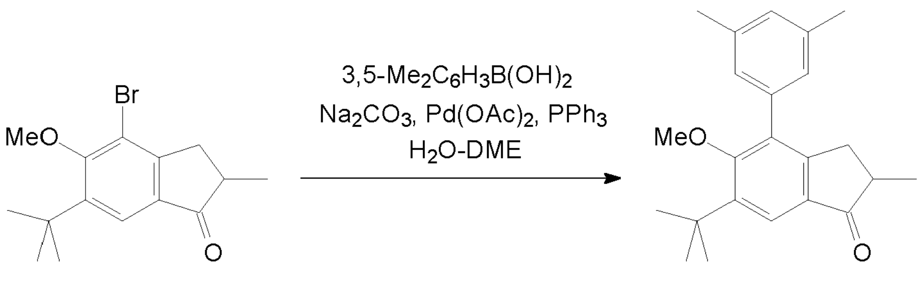


A mixture of 49.14 g (157.9 mmol) of 2-methyl-4-bromo-5-methoxy-6-tert-butylindan-1-one, 29.6 g (197.4 mmol, 1.25 eq.) of (3,5-dimethylphenyl)boronic acid, 45.2 g (427 mmol) of $Na_2CO_3$, 1.87 g (8.3 mmol, 5 mol%) of$Pd(OAc)_2$, 4.36 g (16.6 mmol, 10 mol%) of $PPh_3$, 200 ml of water, and 500 ml of 1,2-dimethoxyethane was refluxed for 6.5 h. DME was evaporated on a rotary evaporator, 600 ml of water and 700 ml of dichloromethane were added to the residue. The organic layer was separated, and the aqueous one was additionally extracted with 200 ml of dichloromethane. The combined extract was dried over $K_2CO_3$ and then evaporated to dryness to give a black oil. The crude product was

purified by flash chromatography on silica gel 60 (40-63 μm, hexane-dichloromethane = 1:1, vol., then, 1:3, vol.) to give 48.43 g (91%) of 2-methyl-4-(3,5-dimethylphenyl)-5-methoxy-6-*tert*-butylindan-1-one as a brownish oil.

Anal. calc. for $C_{23}H_{28}O_2$: C, 82.10; H, 8.39. Found: C, 82.39; H, 8.52.

$^1H$ NMR ($CDCl_3$): $\delta$ 7.73 (s, 1H), 7.02 (s, 3H), 7.01 (s, 3H), 3.32 (s, 3H), 3.13 (dd, *J* = 17.5 Hz, *J*= 7.8 Hz, 1H), 2.68-2.57 (m, 1H), 2.44 (dd, *J*= 17.5 Hz, *J*= 3.9 Hz), 2.36 (s, 6H), 1.42 (s, 9H), 1.25 (d, *J*= 7.5 Hz, 3H). $^{13}C\{^1H\}$ NMR ($CDCl_3$): $\delta$ 208.90, 163.50, 152.90, 143.32, 138.08, 136.26, 132.68, 130.84, 129.08, 127.18, 121.30, 60.52, 42.17, 35.37, 34.34, 30.52, 21.38, 16.40.

*2-methyl-5-tert-butyl-6-methoxy-7-(3,5-dimethylphenyl)-1H-indene*

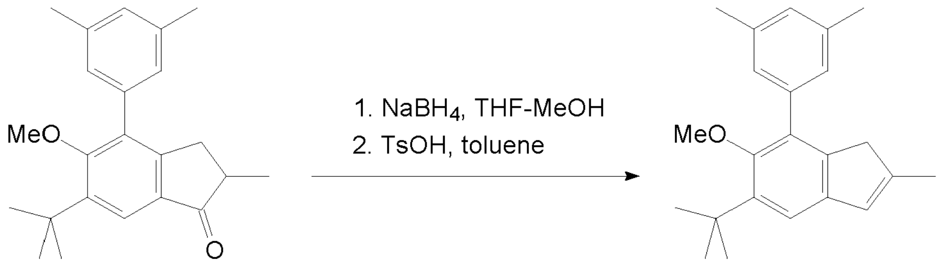


8.2 g (217 mmol) of $NaBH_4$ was added to a solution of 48.43 g (143.9 mmol) of 2-methyl-4-(3,5-dimethylphenyl)-5-methoxy-6-tert-butylindan-1-one in 300 ml of THF cooled to 5 °C. Then, 150 ml of methanol was added dropwise to this mixture by vigorous stirring for ca. 7 h at 5 °C. The resulting mixture was evaporated to dryness, and the residue was partitioned between 500 ml of dichloromethane and 500 ml of 2 M HCl. The organic layer was separated, the aqueous layer was additionally extracted with 100 ml of dichloromethane. The combined organic extract was evaporated to dryness to give a slightly yellowish oil. To a solution of this oil in 600 ml of toluene 400 mg of TsOH was added, this mixture was refluxed with Dean-Stark head for 10 min and then cooled to room temperature using a water bath. The formed solution was washed by 10% $Na_2CO_3$, the organic layer was separated, the aqueous layer was extracted with 150 ml of dichloromethane. The combined organic extract was dried over $K_2CO_3$ and then passed through a short layer of silica gel 60 (40-63 μm). The silica gel layer was additionally washed by 100 ml of dichloromethane. The combined organic elute was evaporated to dryness, and the resulting oil was dried in vacuum at elevated temperature. This procedure gave 45.34 g (98%) of 2-methyl-5-*tert*-butyl-6-methoxy-7-(3,5-dimethylphenyl)-1*H*-indene which was used without additional purification.

Anal. calc. for $C_{23}H_{28}O$: C, 86.20; H, 8.81. Found: C, 86.29; H, 9.07.

$^1H$ NMR ($CDCl_3$): $\delta$ 7.20 (s, 1H), 7.08 (br.s, 1H), 6.98 (br.s, 1H), 6.42 (m, 1H), 3.25 (s, 3H), 3.11 (s, 2H), 2.36 (s, 6H), 2.06 (s, 3H), 1.43 (s, 9H). $^{13}C\{^1H\}$ NMR ($CDCl_3$): $\delta$ 154.20, 145.22, 141.78, 140.82, 140.64, 138.30, 137.64, 131.80, 128.44, 127.18, 126.85, 116.98, 60.65, 42.80, 35.12, 31.01, 21.41, 16.65.

*[2-methyl-4-(3,5-dimethylphenyl)-5-methoxy-6-tert-butyl-1H-inden-1-yl]chlorodimethylsilane*

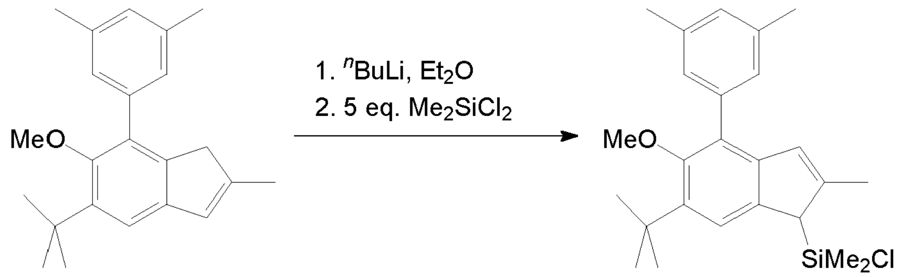


$^n$BuLi in hexanes (2.43 M, 25.2 ml, 61.24 mmol) was added in one portion to a solution of 19.66 g (61.35 mmol) of 2-methyl-5-*tert*-butyl-6-methoxy-7-(3,5-dimethylphenyl)-1*H*-indene in 300 ml of ether cooled to -50 °C. The resulting mixture was stirred for 4 h at room temperature, then the resulting yellow suspension was cooled to -60 °C, and 40.0 ml (42.8 g, 331.6 mmol, 5.4 eqv.) of dichlorodimethylsilane was added in one portion. The obtained solution was stirred

overnight at room temperature and then filtered through a glass frit (G3). The filtrate was evaporated to dryness to give [2-methyl-4-(3,5-dimethylphenyl)-5-methoxy-6-*tert*-butyl-1*H*-inden-1-yl]chlorodimethylsilane as a slightly yellowish oil which was further used without an additional purification.

$^1H$ NMR ($CDCl_3$): $\delta$ 7.38 (s, 1H), 7.08 (s, 2H), 6.98 (s, 1H), 6.43 (s, 1H), 3.53 (s, 1H), 3.25 (s, 3H), 2.37 (s, 6H), 2.19 (s, 3H), 1.43 (s, 9H), 0.43 (s, 3H), 0.17 (s, 3H). $^{13}C\{^1H\}$ NMR ($CDCl_3$): $\delta$ 155.78, 145.88, 143.73, 137.98, 137.56, 137.49, 136.74, 128.32, 127.86, 127.55, 126.64, 120.86, 60.46, 49.99, 35.15, 31.16, 21.41, 17.55, 1.11, -0.58.

*1-methoxy-2-methyl-4-(3,5-Dimethylphenyl)-1,2,3,5,6,7-hexahydro-s-indacene*

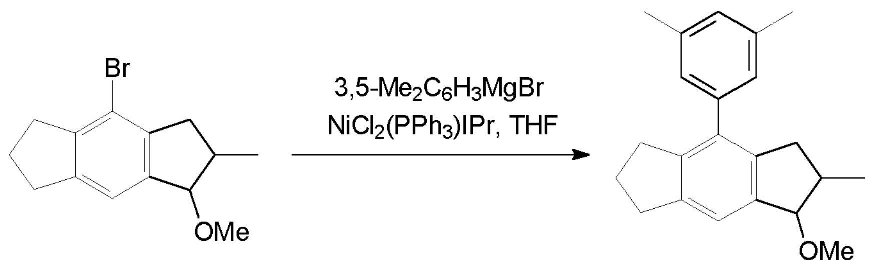


The precursor 4-bromo-1-methoxy-2-methyl-1,2,3,5,6,7-hexahydro-s-indacene was made according to the procedure described in WO2015/158790 A2 (pp 26-29).

To a mixture of 2.0 g (2.56 mmol, 1.8 mol%) of $NiCl_2(PPh_3)IPr$ and 40.0 g (142.3 mmol) of 4-bromo-1-methoxy-2-methyl-1,2,3,5,6,7-hexahydro-s-indacene, 200 ml (200 mmol, 1.4 eq) of 3,5-dimethylphenylmagnesium bromide 1.0 M in THF was added. The resulting solution was refluxed for 3 h, then cooled to room temperature, and 400 ml of water followed by 500 ml of 1.0 M HCl solution were added. Further on, this mixture was extracted with 600 ml of dichloromethane, the organic layer was separated, and the aqueous layer was extracted with 2 × 100 ml of dichloromethane. The combined organic extract was evaporated to dryness to give a slightly greenish oil. The product was isolated by flash-chromatography on silica gel 60 (40-63 μm; eluent: hexanes-dichloromethane = 2:1, vol., then 1:2, vol.). This procedure gave 43.02 g (99%) of 1-methoxy-2-methyl-4-(3,5-dimethylphenyl)-1,2,3,5,6,7-hexahydro-s-indacene as a colorless thick oil as a mixture of two diastereoisomers.

Anal. calc. for $C_{22}H_{26}O$: C, 86.23; H, 8.55. Found: C, 86.07; H, 8.82.

$^1H$ NMR ($CDCl_3$), Syn-isomer: $\delta$ 7.21 (s, 1H), 6.94 (br.s, 1H), 6.90 (br.s, 2H), 4.48 (d, *J* = 5.5 Hz, 1H), 3.43 (s, 3H), 2.94 (t, *J* = 7.5 Hz, 2H), 2.87-2.65 (m, 3H), 2.63-2.48 (m, 2H), 2.33 (s, 6H), 2.02 (quin, *J* = 7.5 Hz, 2H), 1.07 (d, *J* = 6.7 Hz, 3H); Anti-isomer: $\delta$ 7.22 (s, 1H), 6.94 (br.s, 1H), 6.89 (br.s, 2H), 4.38 (d, *J* = 4.0 Hz, 1H), 3.48 (s, 3H), 3.06 (dd, *J* = 16.0 Hz, *J* = 7.5 Hz, 1H), 2.93 (t, *J* = 7.3 Hz, 2H), 2.75 (td, *J* = 7.3 Hz, *J* = 3.2 Hz, 2H), 2.51-2.40 (m, 1H), 2.34 (s, 6H), 2.25 (dd, *J* = 16.0 Hz, *J* = 5.0 Hz, 1H), 2.01 (quin, *J* = 7.3 Hz, 2H), 1.11 (d, *J* = *7.1* Hz, 3H). $^{13}C\{^1H\}$ NMR ($CDCl_3$), Syn-isomer: $\delta$ 142.69, 142.49, 141.43, 139.97, 139.80, 137.40, 135.46, 128.34, 126.73, 120.09, 86.29, 56.76, 39.43, 37.59, 33.11, 32.37, 25.92, 21.41, 13.73; Anti-isomer: $\delta$ 143.11, 142.72, 140.76, 139.72, 139.16, 137.37, 135.43, 128.29, 126.60, 119.98, 91.53, 56.45, 40.06, 37.65, 33.03, 32.24, 25.88, 21.36, 19.36.

*4-(3,5-Dimethylphenyl)-6-methyl-1,2,3,5-tetrahydro-s-indacene*

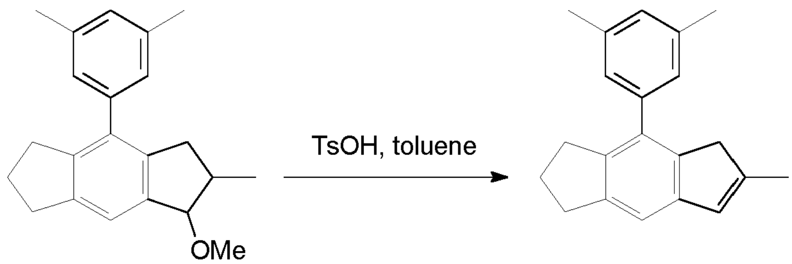


To the solution of 43.02 g (140.4 mmol) 1-methoxy-2-methyl-4-(3,5-dimethylphenyl)-1,2,3,5,6,7-hexahydro-s-indacene in 600 ml of toluene, 200 mg of TsOH was added, and the resulting solution was refluxed using Dean-Stark

head for 15 min. After cooling to room temperature the reaction mixture was washed with 200 ml of 10% $NaHCO_3$. The organic layer was separated, and the aqueous layer was additionally extracted with 300 ml of dichloromethane. The combined organic extract was evaporated to dryness to give light orange oil. The product was isolated by flash-chromatography on silica gel 60 (40-63 μm; eluent: hexanes, then hexanes-dichloromethane = 10:1, vol.). This procedure gave 35.66 g (93%) of 4-(3,5-dimethylphenyl)-6-methyl-1,2,3,5-tetrahydro-s-indacene as a slightly yellowish oil which spontaneously solidified to form a white mass.

Anal. calc. for $C_{21}H_{22}$: C, 91.92; H, 8.08. Found: C, 91.78; H, 8.25.

$^1$H NMR ($CDCl_3$): $\delta$ 7.09 (s, 1H), 6.98 (br.s, 2H), 6.96 (br.s, 1H), 6.44 (m, 1H), 3.14 (s, 2H), 2.95 (t, *J* = 7.3 Hz, 2H), 2.76 (t, *J* = 7.3 Hz, 2H), 2.35 (s, 6H), 2.07 (s, 3H), 2.02 (quin, *J* = 7.3 Hz, 2H). $^{13}$C{$^1$H} NMR ($CDCl_3$): $\delta$ 145.46, 144.71, 142.81, 140.17, 139.80, 137.81, 137.50, 134.33, 128.35, 127.03, 126.48, 114.83, 42.00, 33.23, 32.00, 25.87, 21.38, 16.74.

*[2-methyl-4-(3,5-dimethylphenyl)-5-methoxy-6-tert-butyl-inden-1-yl][2-methyl-4-(3,5-dimethylphenyl)-1,5, 6, 7-tetrahydro-s-indacen-1-yl]dimethylsilane*

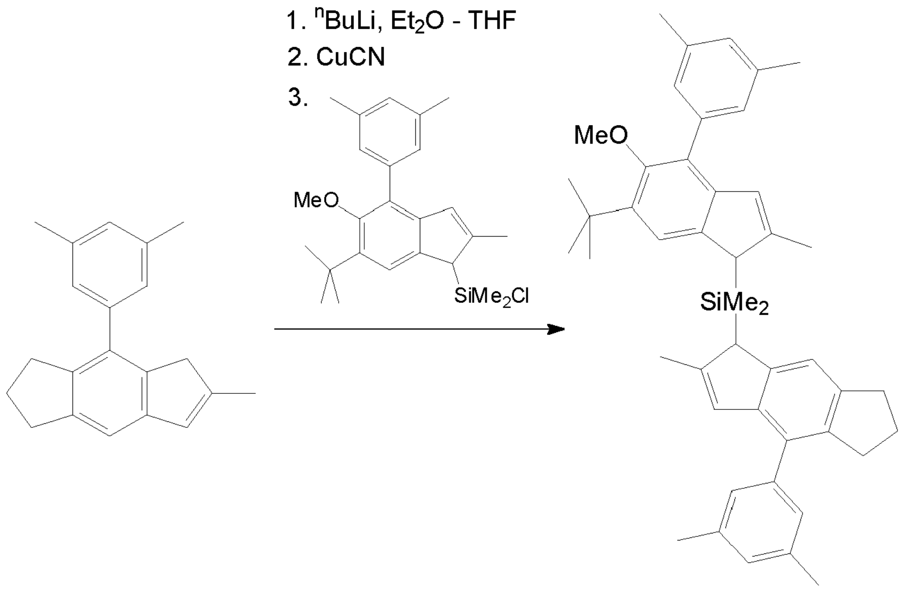


$^n$BuLi in hexanes (2.43 M, 25.2 ml, 61.24 mmol) was added in one portion to a solution of 16.83 g (61.33 mmol) of 4-(3,5-dimethylphenyl)-6-methyl-1,2,3,5-tetrahydro-s-indacene in a mixture of 300 ml of ether and 40 ml of THF, cooled to -50 °C. This mixture was stirred overnight at room temperature, then the resulting reddish solution was cooled to -50 °C, and 300 mg of CuCN was added. The obtained mixture was stirred for 0.5 h at -25 °C, then a solution of [2-methyl-4-(3,5-dimethylphenyl)-5-methoxy-6-*tert*-butyl-1*H*-inden-1-yl]chlorodimethylsilane (prepared above, ca. 61.24 mmol) in 150 ml of ether was added in one portion. This mixture was stirred overnight at room temperature, then filtered through a pad of silica gel 60 (40-63 μm), which was additionally washed with 2 × 50 ml of dichloromethane. The combined filtrate was evaporated under reduced pressure, and the residue was dried in vacuum at elevated temperature. This procedure gave 39.22 g (98%) of [2-methyl-4-(3,5-dimethylphenyl)-5-methoxy-6-*tert*-butyl-1*H*-inden-1-yl][2-methyl-4-(3,5-dimethylphenyl)-1,5,6,7-tetrahydro-s-indacen-1-yl]dimethylsilane (a ca. 3:2 mixture of stereoisomers) as a reddish glass.

$^1$H NMR ($CDCl_3$): $\delta$ 7.48 and 7.33 (2s, sum 1H), 7.26-7.18 (m, 1H), 7.16-7.07 (m, 2H), 7.04-6.95 (m, 4H), 6.51 and 6.45 (2s, sum 2H), 3.69 and 3.65 (2s, sum 2H), 3.28 and 3.26 (2s, sum 3H), 3.01-2.74 (m, 4H), 2.38 ad 2.37 (2s, sum 12H), 2.20 and 2.15 (2s, sum 6H), 2.09-1.97 (m, 2H), 1.43 and 1.42 (2s, sum 9H), -0.17, -0.18, -0.19 and -0.24 (4s, sum 6H). $^{13}$C{$^1$H} NMR ($CDCl_3$): $\delta$ 155.29, 147.45, 147.39, 145.99, 145.75, 143.93, 143.90, 143.72, 143.69, 142.06, 142.01, 140.08, 140.06, 139.46, 139.37, 139.26, 139.03, 139.00, 138.24, 137.50, 137.34, 137.07, 136.99, 130.39, 128.23, 128.14, 127.92, 127.50, 127.46, 127.26, 126.12, 126.05, 125.99, 125.94, 120.55, 120.51, 118.46, 118.27, 60.49, 47.33, 46.86, 46.76, 35.14, 33.33, 33.28, 32.18, 31.26, 31.21, 25.95, 25.91, 21.44, 17.96, 17.88, -5.27, -5.39, -5.50, -5.82.

*Anti-dimethylsilanediyl[2-methyl-4-(3,5-dimethylphenyl)-5-methoxy-6-tert-butyl-inden-1-yl][2-methyl-4-(3,5-dimethylphenyl)-1,5,6,7-tetrahydro-s-indacen-1-yl]hafnium dichloride*

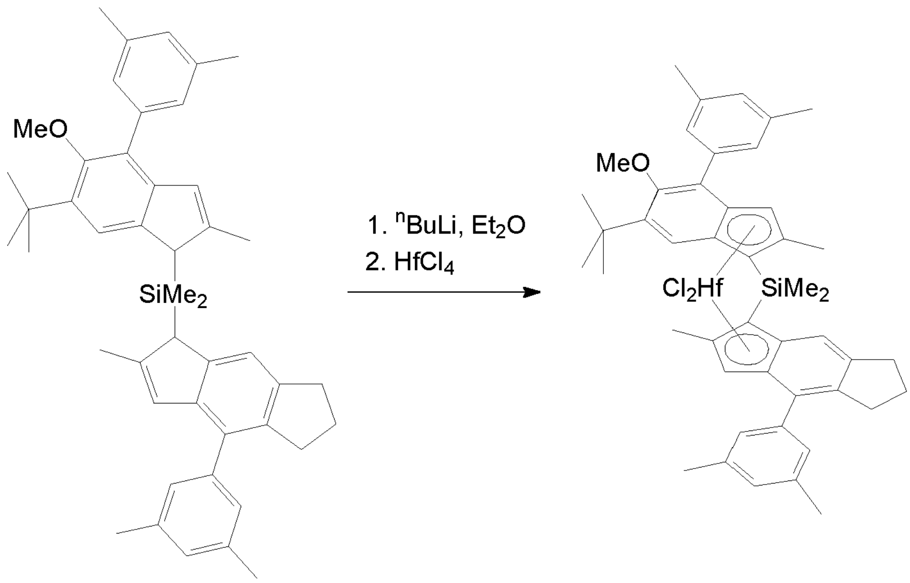


*ⁿ*BuLi in hexanes (2.43 M, 49.6 ml, 120.5 mmol) was added in one portion to a solution of 39.22 g (60.25 mmol) of [2-methyl-4-(3,5-dimethylphenyl)-5-methoxy-6-*tert*-butyl-1*H*-inden-1-yl][2-methyl-4-(3,5-dimethylphenyl)-1,5,6,7-tetrahydro-*s*-indacen-1-yl]dimethylsilane (prepared above) in 400 ml of ether, cooled to -50 °C. This mixture was stirred overnight at room temperature. The resulting red solution was then cooled to -78 °C, and 19.3 g (60.26 mmol) of HfCl4 was added. The reaction mixture was stirred for 24 h at room temperature to give an orange suspension. The precipitate was filtered off (G4), then washed with 30 ml of cold ether. On the evidence of NMR spectroscopy, this precipitate was pure *syn*-hafnocene dichloride (with LiCl), while the filtrate included a ca. 4/1 mixture of *anti*- and *syn*-hafnocene dichlorides (in favor to *anti*-) contaminated with some other impurities. The precipitate was dissolved in 150 ml of hot toluene, and the formed suspension was filtered to remove LiCl through glass frit (G4). The filtrate was evaporated to ca. 45 ml. Orange sold material precipitated overnight at room temperature was filtered off (G3) and then dried in vacuum. This procedure gave 8.1 g (15%) of pure *syn*-complex. The mother liquor was evaporated almost to dryness, and the residue was triturated with 20 ml of n-hexane to give 2.6 g (4.8%) of *syn*-hafnocene dichloride as an orange powder. The ether mother liquor was evaporated to ca. 60 ml, the precipitated yellow powder was filtered off (G4), washed with 20 ml of cold (0 °C) ether, and then dried under vacuum. This procedure gave 10.2 g (19%) of pure *anti*-hafnocene dichloride. Thus, the total yield of *anti*- and *syn*-hafnocene dichlorides isolated in this synthesis was 20.9 g (39%).

*Anti*-dimethylsilanediyl[2-methyl-4-(3,5-dimethylphenyl)-5-methoxy-6-*tert*-butyl-inden-1-yl][2-methyl-4-(3,5-dimethylphenyl)-1,5,6,7-tetrahydro-*s*-indacen-1-yl]hafnium dichloride:
Anal. calc. for $C_{46}H_{52}Cl_2OSiHf$: C, 61.50; H, 5.83. Found: C, 61.38; H, 6.15.

$^1H$ NMR ($CDCl_3$): $\delta$ 7.51 (s, 1H), 7.43 (s, 1H), 7.34-7.02 (br.m, 4H), 6.94 (s, 2H), 6.61 (s, 1H), 6.46 (s, 1H), 3.42 (s, 3H), 3.11-2.79 (m, 4H), 2.33 (s, 6H), 2.32 (s, 6H), 2.27 (s, 6H), 2.07-1.92 (m, 2H), 1.38 (s, 9H), 1.27 (s, 3H), 1.26 (s, 3H). $^{13}C\{^1H\}$ NMR($CDCl_3$,): $\delta$ 159.55, 144.17, 143.58, 142.84, 138.38, 137.82, 137.57, 136.94, 133.09, 132.67, 132.40, 132.11, 131.23, 128.84, 128.76, 127.40, 126.88, 126.53, 124.97, 121.28, 120.84, 119.76, 119.71, 117.90, 82.92, 82.40, 62.62, 35.68, 33.11, 32.07, 30.43, 26.56, 21.46, 21.38, 18.26, 18.12, 2.63, 2.53.

*Syn*-dimethylsilanediyl[2-methyl-4-(3,5-dimethylphenyl)-5-methoxy-6-*tert*-butyl-inden-1-yl][2-methyl-4-(3,5-dimethylphenyl)-1,5,6,7-tetrahydro-s-indacen-1-yl]hafnium dichloride:

Anal. calc. for $C_{46}H_{52}Cl_2OSiHf$: C, 61.50; H, 5.83. Found: C, 61.59; H, 6.06.

$^1H$ NMR ($CDCl_3$): $\delta$ 7.53 (s, 1H), 7.41 (s, 1H), 7.29-7.06 (m, 4H), 6.94 (s, 2H), 6.50 (s, 1H), 6.35 (s, 1H), 3.26 (s, 3H), 2.95-2.77 (m, 4H), 2.49 (s, 3H), 2.46 (s, 3H), 2.33 (2s, sum 12H), 1.99-1.86 (m, 1H), 1.86-1.73 (m, 1H), 1.40 (s, 3H), 1.37 (s, 9H), 1.18 (s, 3H). $^{13}C\{^1H\}$ NMR ($CDCl_3$,): $\delta$ 158.61, 143.03, 142.46, 142.16, 138.42, 137.73, 137.52, 136.98, 135.33, 134.60, 133.69, 132.53, 131.19, 128.79, 128.71, 127.34, 126.85, 126.00, 125.76, 121.95, 121.45, 119.12, 118.91, 118.55, 84.66, 84.26, 62.31, 35.48, 33.25, 31.94, 30.40, 26.60, 21.44, 18.44, 18.31, 2.93, 2.61

Metallocene used in the examples:

*rac-anti*-dimethylsilanediyl[2-methyl-4-(3',5'-dimethyl phenyl)-1,5,6,7-tetrahydro-s-indacen-1-yl][2-methyl-4-(3',5'-dimethylphenyl)-5-methoxy-6-*tert*-butylinden-1-yl]hafnium dichloride

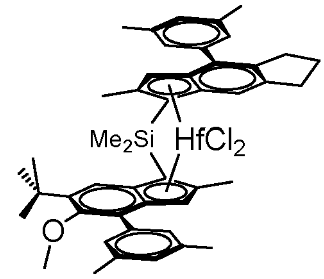

*Preparation of Catalyst*

The metallocene described above was used in preparing a catalyst.

The following reagents were used:
MAO was used as a 30 wt% solution in toluene. Trityl tetrakis(pentafluorophenyl)borate (Boulder Chemicals) was used as purchased. As surfactants were used perfluoroalkylethyl acrylate esters (CAS number 65605-70-1) purchased from the Cytonix corporation, dried over activated molecular sieves (2 times) and degassed by argon bubbling prior to use (S 1) or 1H,1H-Perfluoro(2-methyl-3-oxahexan-1-ol) (CAS 26537-88-2) purchased from Unimatec, dried over activated molecular sieves (2 times) and degassed by argon bubbling prior to use (S2). Hexadecafluoro-1,3-dimethylyclohexane (PFC) (CAS number 335-27-3) was obtained from commercial sources and dried over activated molecular sieves (2 times) and degassed by argon bubbling prior to use. Propylene is provided by Borealis and adequately purified before use. Triethylaluminum was purchased from Crompton and used in pure form. Hydrogen is provided by AGA and purified before use.

All the chemicals and chemical reactions were handled under an inert gas atmosphere using Schlenk and glovebox techniques, with oven-dried glassware, syringes, needles or cannulas.

Inside the glovebox, surfactant S2 solution (28.8 mg of dry and degassed S2 dilute in 0.2 mL toluene) was added dropwise to 5 mL of 30 wt% Chemtura MAO. The solutions were left under stirring for 10 minutes. Then, 102,23 mg of the metallocene was added to MAO/surfactant. After 60 minutes, 104.9 mg of trityl tetrakis(pentafluorophenyl)borate was added. The mixture was left to react at room temperature inside the glovebox for 60 min. Then, the surfactant-MAO-metallocene-borate solution were added into a 50 mL emulsification glass reactor containing 40 mL of PFC at -10 °C and equipped with an overhead stirrer (stirring speed = 600 rpm). A yellow emulsion formed immediately and stirred during 15 minutes at -10 °C / 600 rpm. Then the emulsion was transferred via a 2/4 Teflon tube to 100 mL of hot PFC at 90 °C and stirred at 600 rpm until the transfer is completed. Then the speed was reduced to 300 rpm. After 15 minutes stirring, the oil bath was removed and the stirrer turned off. The catalyst was left to settle up on top of the PFC and after 35 minutes the solvent was siphoned off. The remaining catalyst was dried during 2 hours at 50 °C over an argon flow. 0.67 g of a yellow free flowing powder was obtained.

Catalyst results are disclosed in Table 1.

Table 1:

| ICP Al /wt% | ICP Hf /wt% | Al/Hf /mol/mol | MC /wt% |
|---|---|---|---|
| 31.4 | 1.19 | 174 | 6.0 |

***Off-line prepolymerization ("prepping") procedure***

The catalyst was pre-polymerized according to the following procedure: Off-line pre-polymerization experiment was done in a 125 mL pressure reactor equipped with gas-feeding lines and an overhead stirrer. Dry and degassed perfluoro-1,3-dimethylcyclohexane (15 $cm^3$) and 402.0 mg of the catalyst to be pre-polymerized were loaded into the reactor inside a glove box and the reactor was sealed. The reactor was then taken out from the glove box and placed inside a water cooled bath kept at 25 °C. The overhead stirrer and the feeding lines were connected and stirring speed

set to 450 rpm. The experiment was started by opening the propylene feed into the reactor. The total pressure in the reactor was raised to about 5 barg and held constant by propylene feed via mass flow controller until the target degree of polymerisation was reached. The reaction was stopped by flashing the volatile components. Inside glove box, the reactor was opened and the content poured into a glass vessel. The perfluoro-1,3-dimethylcyclohexane was evaporated until a constant weight was obtained to yield 1.6670 g of the pre-polymerised catalyst with a pre-polymerization degree (g-pol/g-cat) of 3.62.

The pre-polymerization degree is defined as weight of polymer/weight of solid catalyst before pre-polymerization step.

***Preparation of heterophasic polypropylene copolymer SSC-HECO***

The heterophasic polypropylene copolymer has been prepared by means of a 3-step polymerization (bulk homopolymerization + gas phase (GP1) homopolymerization + gas phase (GP2) $C_2/C_3$ copolymerization) in a 20-L reactor, as described below.

*Step1: Prepolymerization and Bulk propylene homopolymerization*

A stirred autoclave (double helix stirrer) with a volume of 21.2 $dm^3$ containing 0.2 bar-g propylene, was filled with additional 3.97 kg propylene. After adding 0.73 mmol triethylaluminium (Aldrich, 1 molar solution in n-hexane) using a stream of 250 g propylene, the solution was stirred at 20 °C and 250 rpm for 20 min. Then the catalyst was injected as described in the following. The solid, pre-polymerized catalyst was loaded into a 5-mL stainless steel vial inside the glovebox, the vial was attached to the autoclave, then a second 5-mL vial containing 4 ml n-hexane and pressurized with 10 bars of $N_2$ was added on top, the valve between the two vials was opened and the solid catalyst was contacted with hexane under $N_2$ pressure for 2 s, then flushed into the reactor with 250 g propylene. Stirring speed was increased to 250 rpm and pre-polymerization was run for 10 min at 20 °C. At the end of the prepolymerization step, the stirring speed was increased to 350 rpm and the polymerization temperature increased to 80 °C. When the internal reactor temperature reached 71 °C, 1.5 Nl of $H_2$ was added with a defined flow via thermal mass flow controller. The reactor temperature was held constant throughout the polymerization. A polymerization time of 40 minutes starting when the temperature was 2 °C below the set polymerization temperature was used for this stage.

*Step 2: Gas Phase: propylene homopolymerization (GP1)*

After the bulk step was finished, the stirrer speed was adjusted to 50 rpm and the reactor pressure was reduced to 0.5 bar below the set pressure of 24 barg by venting. Then the stirrer speed was set to 250 rpm, the reactor temperature to 80°C and 2.0 Nl of $H_2$ was dosed via MFC. Then the reactor P and T were held constant by propylene feed via MFC until the target split had been reached. Polymerization time for this stage was 40 minutes.

*Step 3: Gas Phase: ethylene/propylene copolymerization (GP2)*

When the GP1 had been finished, the stirrer speed was reduced to 50 rpm. The reactor pressure was lowered to 0.3 barg by venting, the temperature and control device was set to 70°C. Then the reactor was filled with 200 g propylene at a flow of 70 g/min and flushed again to 0.3 barg.

Afterwards the stirrer speed was adjusted to 250 rpm. Then the reactor was filled with a $C_3/C_2$ monomer ratio (transition feed) of 0.64 mol/mol. The speed of the reactor filling during the transition was limited by the max. flow of the gas flow controllers. When the reactor temperature reached 85 °C and the reactor pressure reached the set value of 24 barg, the composition of the fed $C_3/C_2$ mixture was changed to the target copolymer composition of 0.39 mol/mol and temperature and pressure were held constant until the amount of $C_3/C_2$ gas mixture required to reach the target rubber split had been consumed. Polymerization time for this stage was 30 minutes.

The reaction was stopped by setting the stirrer speed to 20 rpm, cooling the reactor to 30 °C and flashing the volatile components.

After flushing the reactor twice with $N_2$ and one vacuum/$N_2$ cycle, the product was taken out and dried overnight in a fume hood. 100 g of the polymer was additivated with 0.2 wt% Ionol (2,6-Di-tert-butyl-4-methylphenol, CAS No. 128-37-0, commercially available from Oxiris Chemicals, Spain) and 0.1 wt% Irganox P-EPQ (Tetrakis-(2,4-di-t-butylphenyl)-4,4'-biphenylen-di-phosphonite, CAS No. 38613-77-3, commercially available from BASF AG, Germany), both antioxidants being dissolved in acetone, and then dried overnight in a hood plus 2 hours in a vacuum drying oven at 60 °C.

***Preparation of heterophasic polypropylene composition***

Compounding of the heterophasic polypropylene copolymer with a nucleating agent, if any, and further additives was carried out in line with Table 1 below.

Compounding of the compositions in Table 1 was implemented on ZSK 18 MEGAlab laboratory twin screw extruder under the following conditions: speed 200 rpm; melt temperature 175-190 °C; pressure 45-50 bar; output 5 kg/h.

***The following materials and compounds are used in the Examples***

| | |
|---|---|
| AO | Irganox B 215 commercially available from BASF SE |
| AS | $Mg_{4,5}Al_2(OH)_{13}(CO_3)$ 3.5 $H_2O$, CAS-no. 11097-59-9, commercially available as Hycite 713 from BASF AG, Germany |
| NU | Ca salt of 1,2-cyclohexane dicarboxylic acid (1:1), CAS-no. 491589-22-1, commercially available as Hyperform HPN-20E from Milliken, USA, nucleating agent |
| PVCH | polyvinylcyclohexane, polymeric nucleating agent |
| ZN-HECO | Heterophasic propylene copolymer produced by a Ziegler-Natta catalyst, having an $MFR_2$ of 3.0 g/10 min (230 °C, ISO 1133), a xylene cold soluble (XCS) fraction of 14 wt%, an ethylene content of 4.2 wt%, a flexural modulus of 1400 MPa (ISO 178), and a melting temperature of 168 °C (DSC), containing 15 ppm of polymeric nucleating agent, commercially available as BC918CF from Borealis AG, Austria. |
| LLDPE | Bimodal terpolymer LLDPE having a density of 918 kg/m$^3$ (ASTM D792), an $MFR_2$ of 1.5 g/10 min (190 °C, ASTM D1238), and a melting temperature of 122 °C (ISO 11357/03), commercially available as Anteo™ FK1820 from Borouge Pte Ltd., UAE |
| HOMO 1 | Propylene homopolymer produced by a Ziegler-Natta catalyst having an $MFR_2$ of 4 g/10 min (230 °C, ISO 1133), a flexural modulus of 1700 MPa (ISO 178), and a melting temperature of 163 °C (DSC), containing 25 ppm of polymeric nucleating agent, commercially available as HC205TF from Borealis AG, Austria. |
| HOMO2 | Propylene homopolymer produced by a Ziegler-Natta catalyst having an $MFR_2$ of 2 g/10 min (230 °C, ISO 1133), a flexural modulus of 1700 MPa (ISO 178), and a density of 905 kg/m$^3$ (ISO 1183), commercially available as HB306MO from Borealis AG, Austria. |
| C3C2copo | Semi-crystalline copolymer of propylene and ethylene produced with a metallocene catalyst with a predominantly amorphous ethylene propylene matrix (rubber) laced with a network of fine, well-dispersed isotactic polypropylene crystallites having an ethylene content of 16 wt%, an $MFR_2$ of 3 g/10 min (230 °C), and a density of 862 kg/m$^3$ (ASTM D1505), commercially available as Vistamaxx™ 6102 from ExxonMobil, USA. |

***Inventive and Comparative Examples***

The compositions of the inventive and comparative examples and the respective properties thereof are indicated in Table 1 below.

Comparative Example 1, CE1, is based on the heterophasic polypropylene copolymer produced by a single-site catalyst as described above in detail, but does not contain any nucleating agent. The balance of stiffness and impact strength (NIS, notched impact strength) is rather good, however, the transparency as indicated by the haze value is not acceptable. Accordingly, OMA is only 176.

Inventive Example 1, IE1, is based on the same heterophasic polypropylene copolymer produced by a single-site catalyst but the composition in addition comprises a polymeric nucleating agent, which is contained in the masterbatch

ZN-HECO. Surprisingly, there is a significant increase of stiffness *and* impact strength *and* transparency. Accordingly, OMA is 751.

Stiffness and transparency can further be improved by adding a second (non-polymeric) nucleating agent NU as can be seen from Inventive Example 2, IE2. Accordingly, OMA is 1154.

The performance can be shifted to still considerably higher impact strength at still improved transparency while stiffness is only slightly reduced but remains in the same order of magnitude as can be seen from Inventive Example 3, IE3. Accordingly, OMA is 1733.

The solution of Comparative Example 2, CE2, is based on dual nucleation but the composition is based on Ziegler-Natta-based polymers. The comparison with IE2 shows very much lower impact strength and reduced transparency at only slightly higher stiffness. Accordingly, OMA is merely 362.

Comparative Example 3, CE3, is based on a Ziegler-Natta-based propylene homopolymer as matrix (nucleated) and on a metallocene-based elastomeric phase. Impact strength is reduced. Accordingly, OMA is merely 261.

If one compares the inventive examples with similar stiffness and same nucleation concept, i.e. IE1 and CE3, the transparency is on the same level but the impact strength is much higher in the example according to the invention.

Table 1: Compositions of examples and properties thereof

| | | IE1 | IE2 | IE3 | CE1 | CE2 | CE3 |
|---|---|---|---|---|---|---|---|
| SSC-HECO | wt% | 89.8 | 89.65 | 80.65 | 99.8 | | |
| AO | wt% | 0.15 | 0.15 | 0.15 | 0.15 | | |
| AS | wt% | 0.05 | 0.05 | 0.05 | 0.05 | | |
| NU | wt% | | 0.15 | 0.15 | | | |
| ZN-HECO | wt% | 10 | 10 | 9 | | 55 | |
| LLDPE | wt% | | | 10 | | | |
| HOMO1 | wt% | | | | | 45 | 57 |
| HOMO2 | wt% | | | | | | 38 |
| C3C2copo | wt% | | | | | | 5 |
| MFR | g/10 min | 2.7 | 2.7 | 2.5 | 2.5 | 3.3 | 3.3 |
| PVCH | ppm | 1.5 | 1.5 | 1.5 | 0 | 7.5 | 15 |
| NU | ppm | 125 | 1625 | 1625 | 0 | 650 | 0 |
| Haze | % | 37 | 26 | 24 | 55 | 34 | 34 |
| NIS/23 °C | $kJ/m^2$ | 19.7 | 19.9 | 30.1 | 7.6 | 7.6 | 5.9 |
| NIS/-20 °C | $kJ/m^2$ | 1.0 | 1.0 | 1.32 | 1.03 | 0.96 | 1.67 |
| Flexural mod. | MPa | 1421 | 1523 | 1387 | 1283 | 1597 | 1481 |
| OMA | - | 751 | 1154 | 1733 | 176 | 362 | 261 |
| SF | wt% | 11.8 | 11.8 | n.d. | 9.3 | 8.6 | 5.6 |
| C2 | wt% | 2.3 | 2.3 | n.d. | 2.3 | 2.7 | 1.9 |
| C2(SF) | wt% | 17.1 | 17.1 | n.d. | 17.4 | 22.6 | 12.6 |
| C2(CF) | wt% | 1.3 | 1.3 | n.d. | 1.1 | 1.4 | 1.6 |
| IV | dl/g | 2.34 | 2.34 | n.d. | 2.31 | 2.38 | 2.4 |
| IV(SF) | dl/g | 1.9 | 1.9 | n.d. | 1.7 | 1.8 | 1.4 |
| IV(CF) | dl/g | 2.3 | 2.3 | n.d. | 2.3 | 2.4 | 2.4 |
| IV(SF)/IV(CF) | | 0.80 | 0.80 | n.d. | 0.72 | 0.74 | 0.60 |
| G' | MPa | 765 | 788 | 698 | 737 | 815 | 901 |
| $T_{g1}$ | °C | -0.1 | 0.2 | 1.0 | -0.2 | 0.7 | 0 |
| $T_{g2}$ | °C | -40.6 | -40.7 | -38.7 | -39.6 | -40.7 | -36 |
| $T_{c1}$ | °C | 126 | 127 | 126 | 121 | 128 | 127 |
| $T_{c2}$ | °C | | | 111 | | | |
| $T_{m1}$ | °C | 161 | 162 | 161 | 160 | 166 | 163 |
| $T_{m2}$ | °C | | | 123 | | | |
| $H_{m1}$ | J/g | 100 | 101 | 79 | 98 | 105 | 105 |
| $H_{m2}$ | J/g | | | 20.1 | | | |

## Claims

1. A heterophasic polypropylene composition (HECO) comprising a matrix phase (M) and an elastomeric phase dispersed therein, wherein the polypropylene composition comprises

   (A) 60.0 to 95.0 wt%, based on the total weight of the composition, of a crystalline propylene homopolymer (H-PP) with a melting temperature $T_m$ measured by differential scanning calorimetry (DSC) of more than 155 °C,
   (B) 5.0 to 20.0 wt%, based on the total weight of the composition, of an elastomeric ethylene-propylene rubber (EPR), and
   (C) at least one polymeric nucleating agent, wherein the at least one polymeric nucleating agent comprises a polymer selected from vinylcycloalkane polymer and vinylalkane polymer,
   wherein the total sum of the components of the composition is 100 wt%, based on the total weight of the composition,
   wherein the crystalline propylene homopolymer (H-PP) and the elastomeric ethylene-propylene rubber (EPR) have been produced in the presence of a single-site catalyst (SSC),
   wherein the heterophasic polypropylene composition is **characterized by** a soluble fraction (SF) determined in 1,2,4-trichlorobenzene at 40 °C in the range of 5.0 to 20.0 wt%, based on the total weight of the composition, and wherein the soluble fraction (SF) has an ethylene content C2(SF) in the range of 12.0 to 40.0 wt%.

2. The heterophasic polypropylene composition (HECO) according to claim 1 with an $MFR_2$ (2.16 kg, 230 °C) measured according to ISO1133 in the range of 2.0 to 10.0 g/10 min.

3. The heterophasic polypropylene composition (HECO) according to claim 1 or 2, wherein the intrinsic viscosity (IV) of the soluble fraction IV(SF) of the heterophasic polypropylene composition (HECO) is in the range of 1.0 to 3.0 dl/g.

4. The heterophasic polypropylene composition (HECO) according to any one of the preceding claims, wherein the ratio between the intrinsic viscosity (IV) of the soluble fraction IV(SF) and the intrinsic viscosity (IV) of the crystalline fraction IV(CF) is in the range of 0.5 to 1.2, preferably 0.7 to 1.0, more preferably 0.8 to 1.0.

5. The heterophasic polypropylene composition (HECO) according to any one of the preceding claims, wherein the amount of the at least one polymeric nucleating agent is 0.0001 to 1.0 wt%, based on the total weight of the composition.

6. The heterophasic polypropylene composition (HECO) according to any one of the preceding claims, further comprising a polyethylene and/or a plastomer in an amount of 4.0 to 20.0 wt%, based on the total weight of the composition.

7. The heterophasic polypropylene composition (HECO) according to claim 6, wherein the polyethylene and/or the plastomer has a density in the range of 890 to 925 $kg/m^3$ and an $MFR_2$ (2.16 kg, 190 °C) measured according to ISO1133 in the range of 1.0 to 100 g/10 min.

8. The heterophasic polypropylene composition (HECO) according to claim 6 or 7, wherein the polyethylene and/or plastomer is a linear low density polyethylene (LLDPE) which is present in an amount of 5.0 to 15.0 wt%, based on the total weight of the composition, wherein the heterophasic polypropylene composition has two melting temperatures $T_{m1}$ and $T_{m2}$ measured by differential scanning calorimetry (DSC) with $T_{m1}$ being higher than 155 °C and $T_{m2}$ being in the range of 60 to 125 °C.

9. The heterophasic polypropylene composition (HECO) according to any one of the preceding claims, wherein the at least one polymeric nucleating agent comprises vinylcyclohexane polymer.

10. The heterophasic polypropylene composition (HECO) according to any one of the preceding claims, wherein the polymeric nucleating agent is introduced together with 7.0 to 12.0 wt%, based on the total weight of the composition, of a Ziegler-Natta-based heterophasic polypropylene having a melting temperature $T_{m3}$ measured by differential scanning calorimetry (DSC) of higher than 155 °C and an $MFR_2$ (2.16 kg, 230 °C) measured according to ISO 1133 in the range of 2.0 to 10.0 g/10 min.

11. The heterophasic polypropylene composition (HECO) according to any one of the preceding claims, wherein the heterophasic polypropylene composition (HECO) comprises two nucleating agents, wherein one nucleating agent is a polyvinylcyclohexane (PVCH) and the second nucleating agent is selected from the group consisting of salts

of monocarboxylic acids and polycarboxylic acids.

**12.** The heterophasic polypropylene composition (HECO) according to any one of the preceding claims, wherein the heterophasic polypropylene composition (HECO) has a haze measured according to ASTM D1033 on a 1.0 mm thick plaque of below 40%, a Charpy notched impact strength NIS at +23 °C measured according to ISO 179 of at least 15 $kJ/m^2$ and a flexural modulus measured according to ISO 178 of at least 1300 MPa.

**13.** A process for the preparation of the heterophasic polypropylene composition (HECO) according to any one of the preceding claims, comprising polymerizing propylene in at least three polymerization steps in the presence of a single-site catalyst (SSC), wherein

a) in the first polymerization reactor (R1) propylene is polymerized to obtain a first propylene homopolymer fraction (H-PP1), said first propylene homopolymer fraction (H-PP1) is transferred to a second polymerization reactor (R2),
b) in the second polymerization reactor (R2) a second propylene homopolymer fraction (H-PP2) is produced, forming together with the first propylene homopolymer fraction (H-PP1) the propylene homopolymer (H-PP),
c) in the third polymerization reactor the elastomeric ethylene propylene rubber fraction (EPR) is produced in the presence of the propylene homopolymer (H-PP) which is produced in reaction steps a) and b), and
d) the at least one polymeric nucleating agent is introduced either

- as a master batch by a compounding step subsequently to polymerization step c),
or
- via a prepolymerization step prior to the first polymerization step a) in a prepolymerization reactor (PR) wherein the polymeric nucleating agent is produced and a mixture of the single-site catalyst (SSC) and the polymeric nucleating agent is obtained, and, subsequent to the prepolymerization, the mixture of the single-site catalyst (SSC) and the polymeric nucleating agent produced in the prepolymerization reactor (PR) is transferred to the first reactor (R1).

**14.** An article obtained by extrusion of a heterophasic polypropylene composition (HECO) according to any one of claims 1 to 12.

**15.** Packaging article comprising the extruded article according to claim 14.

## Patentansprüche

**1.** Eine heterophasische Polypropylen-Zusammensetzung (HECO), umfassend eine Matrixphase (M) und eine darin dispergierte elastomere Phase, wobei die Polypropylen-Zusammensetzung umfasst

(A) 60,0 bis 95,0 Gew.-%, bezogen auf das Gesamtgewicht der Zusammensetzung, eines kristallinen Propylen-Homopolymers (H-PP) mit einer Schmelztemperatur $T_m$, gemessen durch dynamische Differenzkalorimetrie (DSC), von mehr als 155 °C,
(B) 5,0 bis 20,0 Gew.-%, bezogen auf das Gesamtgewicht der Zusammensetzung, eines elastomeren Ethylen-Propylen-Kautschuks (EPR), und
(C) mindestens ein polymeres Nukleierungsmittel, wobei das mindestens eine polymere Nukleierungsmittel ein Polymer umfasst, das aus Vinylcycloalkan-Polymer und Vinylalkan-Polymer ausgewählt ist,
wobei die Gesamtsumme der Komponenten der Zusammensetzung 100 Gew.-%, bezogen auf das Gesamtgewicht der Zusammensetzung, beträgt,
wobei das kristalline Propylen-Homopolymer (H-PP) und der elastomere Ethylen-Propylen-Kautschuk (EPR) in Gegenwart eines Single-Site-Katalysators (SSC) hergestellt worden sind,
wobei die heterophasische Polypropylen-Zusammensetzung durch einen lösliche Fraktion (SF), bestimmt in 1,2,4-Trichlorbenzol bei 40 °C, im Bereich von 5,0 bis 20,0 Gew.-%, bezogen auf das Gesamtgewicht der Zusammensetzung, gekennzeichnet ist, und
wobei die lösliche Fraktion (SF) einen Ethylen-Gehalt C2(SF) im Bereich von 12,0 bis 40,0 Gew.-% aufweist.

**2.** Die heterophasische Polypropylen-Zusammensetzung (HECO) nach Anspruch 1 mit einem $MFR_2$ (2,16 kg, 230 °C), gemessen nach ISO1133, im Bereich von 2,0 bis 10,0 g/10 min.

3. Die heterophasische Polypropylen-Zusammensetzung (HECO) nach Anspruch 1 oder 2, wobei die intrinsische Viskosität (IV) der löslichen Fraktion IV(SF) der heterophasischen Polypropylen-Zusammensetzung (HECO) im Bereich von 1,0 bis 3,0 dl/g liegt.

4. Die heterophasische Polypropylen-Zusammensetzung (HECO) nach einem der vorhergehenden Ansprüche, wobei das Verhältnis zwischen der Grenzviskosität (IV) der löslichen Fraktion IV(SF) und der Grenzviskosität (IV) der kristallinen Fraktion IV(CF) im Bereich von 0,5 bis 1,2, vorzugsweise 0,7 bis 1,0, besonders bevorzugt 0,8 bis 1,0, liegt.

5. Die heterophasische Polypropylen-Zusammensetzung (HECO) nach einem der vorhergehenden Ansprüche, wobei die Menge des mindestens einen polymeren Nukleierungsmittels 0,0001 bis 1,0 Gew.-%, bezogen auf das Gesamtgewicht der Zusammensetzung, beträgt.

6. Die heterophasische Polypropylen-Zzusammensetzung (HECO) nach einem der vorhergehenden Ansprüche, ferner umfassend ein Polyethylen und/oder ein Plastomer in einer Menge von 4,0 bis 20,0 Gew.-%, bezogen auf das Gesamtgewicht der Zusammensetzung.

7. Die heterophasische Polypropylen-Zusammensetzung (HECO) nach Anspruch 6, wobei das Polyethylen und/oder das Plastomer eine Dichte im Bereich von 890 bis 925 kg/$m^3$ und einen $MFR_2$ (2,16 kg, 190 °C), gemessen nach ISO1133, im Bereich von 1,0 bis 100 g/10 min aufweist.

8. Die heterophasische Polypropylen-Zusammensetzung (HECO) nach Anspruch 6 oder 7, wobei das Polyethylen und/oder Plastomer ein lineares Polyethylen niedriger Dichte (LLDPE) ist, das in einer Menge von 5,0 bis 15,0 Gew.-%, bezogen auf das Gesamtgewicht der Zusammensetzung, vorhanden ist, wobei die heterophasische Polypropylen-Zusammensetzung zwei Schmelztemperaturen $T_{m1}$ und $T_{m2}$, gemessen durch dynamische Differenzkalorimetrie (DSC), aufweist, wobei $T_{m1}$ höher als 155 °C ist und $T_{m2}$ im Bereich von 60 bis 125 °C liegt.

9. Die heterophasische Polypropylen-Zusammensetzung (HECO) nach einem der vorhergehenden Ansprüche, wobei das mindestens eine polymere Nukleierungsmittel Vinylcyclohexan-Polymer umfasst.

10. Die heterophasische Polypropylen-Zusammensetzung (HECO) nach einem der vorhergehenden Ansprüche, wobei das polymere Nukleierungsmittel zusammen mit 7,0 bis 12,0 Gew.-%, bezogen auf das Gesamtgewicht der Zusammensetzung, eines heterophasischen Polypropylens auf Ziegler-Natta-Basis mit einer Schmelztemperatur $T_{m3}$, gemessen durch dynamische Differenzkalorimetrie (DSC), von mehr als 155 °C und einem $MFR_2$ (2,16 kg, 230 °C), gemessen nach ISO 1133, im Bereich von 2,0 bis 10,0 g/10 min, hinzugefügt wird.

11. Die heterophasische Polypropylen-Zusammensetzung (HECO) nach einem der vorhergehenden Ansprüche, wobei die heterophasische Polypropylen-Zusammensetzung (HECO) zwei Nukleierungsmittel umfasst, wobei ein Nukleierungsmittel ein Polyvinylcyclohexan (PVCH) ist und das zweite Nukleierungsmittel ausgewählt ist aus der Gruppe bestehend aus Salzen von Monocarbonsäuren und Polycarbonsäuren.

12. Die heterophasische Polypropylen-Zusammensetzung (HECO) nach einem der vorhergehenden Ansprüche, wobei die heterophasische Polypropylen-Zusammensetzung (HECO) eine nach ASTM D1033 an einer 1,0 mm dicken Platte gemessene Trübung von unter 40% aufweist, eine nach ISO 179 gemessene Charpy-Kerbschlagzähigkeit NIS bei +23 °C von mindestens 15 kJ/$m^2$ aufweist, und einen nach ISO 178 gemessenen Biegemodul von mindestens 1300 MPa aufweist.

13. Verfahren zur Herstellung der heterophasischen Polypropylen-Zusammensetzung (HECO) nach einem der vorhergehenden Ansprüche, umfassend die Polymerisation von Propylen in mindestens drei Polymerisationsstufen in Gegenwart eines Single-Site-Katalysators (SSC), wobei

a) in dem ersten Polymerisationsreaktor (R1) Propylen polymerisiert wird, um eine erste Propylen-Homopolymer Fraktion (H-PP1) zu erhalten, die erste Propylen-Homopolymer Fraktion (H-PP1) wird in einen zweiten Polymerisationsreaktor (R2) überführt,
b) im zweiten Polymerisationsreaktor (R2) eine zweite Propylen-Homopolymer Fraktion (H-PP2) hergestellt wird, die zusammen mit der ersten Propylen-Homopolymer Fraktion (H-PP1) das Propylen-Homopolymer (H-PP) bildet,
c) im dritten Polymerisationsreaktor die elastomere Ethylen-Propylen-Kautschuk Fraktion (EPR) in Gegenwart des in den Reaktionsschritten a) und b) hergestellten Propylen-Homopolymers (H-PP) hergestellt wird, und

d) das mindestens eine polymere Nukleierungsmittel entweder

- als Masterbatch durch einen Compoundier-Schritt im Anschluss an den Polymerisationsschritt c) hinzugefügt wird,
oder
- über einen Vorpolymerisations-Schritt vor dem ersten Polymerisationsschritt a) in einem Vorpolymerisations-Rreaktor (PR) hinzugefügt wird, in dem das polymere Nukleierungsmittel hergestellt wird und ein Gemisch aus dem Single-Site-Katalysator (SSC) und dem polymeren Nukleierungsmittel erhalten wird, und nach der Vorpolymerisation das im Vorpolymerisations-Reaktor (PR) hergestellte Gemisch aus dem Single-Site-Katalysator (SSC) und dem polymeren Nukleierungsmittel in den ersten Reaktor (R1) überführt wird.

**14.** Ein Gegenstand, der durch Extrusion einer heterophasischen Polypropylen-Zusammensetzung (HECO) nach einem der Ansprüche 1 bis 12 erhalten wird.

**15.** Ein Verpackungsartikel umfassend den extrudierten Gegenstand nach Anspruch 14.

**Revendications**

**1.** Composition de polypropylène hétérophasique (HECO) comprenant une phase de matrice (M) et une phase élastomère dispersée à l'intérieur, dans laquelle la composition de polypropylène comprend

(A) 60,0 à 95,0 % en poids, sur la base du poids total de la composition, d'un homopolymère de propylène cristallin (H-PP) ayant une température de fusion $T_m$ mesurée par calorimétrie à balayage différentiel (DSC) de plus de 155 °C,
(B) 5,0 à 20,0 % en poids, sur la base du poids total de la composition, d'un caoutchouc élastomère éthylène-propylène (EPR), et
(C) au moins un agent de nucléation polymère, dans laquelle le au moins un agent de nucléation polymère comprend un polymère sélectionné parmi un polymère de vinylcycloalcane et un polymère de vinylalcane,
dans laquelle la somme totale des composants de la composition est de 100 % en poids, sur la base du poids total de la composition,
dans laquelle l'homopolymère de propylène cristallin (H-PP) et le caoutchouc élastomère éthylène-propylène (EPR) ont été produits en présence d'un catalyseur à site unique (SSC),
dans laquelle la composition de polypropylène hétérophasique est **caractérisée par** une fraction soluble (SF) déterminée dans 1,2,4-trichlorobenzène à 40 °C dans la plage de 5,0 à 20,0 % en poids, sur la base du poids total de la composition, et dans laquelle la fraction soluble (SF) a une teneur en éthylène C2 (SF) dans la plage de 12,0 à 40,0 % en poids.

**2.** Composition de polypropylène hétérophasique (HECO) selon la revendication 1 ayant un $MFR_2$ (2,16 kg, 230 °C) mesuré selon ISO 1133 dans la plage de 2,0 à 10,0 g/10 min.

**3.** Composition de polypropylène hétérophasique (HECO) selon la revendication 1 ou 2, dans laquelle la viscosité intrinsèque (IV) de la fraction soluble IV(SF) de la composition de polypropylène hétérophasique (HECO) est dans la plage de 1,0 à 3,0 dl/g.

**4.** Composition de polypropylène hétérophasique (HECO) selon l'une des revendications précédentes, dans laquelle le rapport entre la viscosité intrinsèque (IV) de la fraction soluble IV(SF) et la viscosité intrinsèque (IV) de la fraction cristalline IV(CF) est dans la plage de 0,5 à 1,2, de préférence de 0,7 à 1,0, plus préférablement de 0,8 à 1,0.

**5.** Composition de polypropylène hétérophasique (HECO) selon l'une des revendications précédentes, dans laquelle la quantité du au moins un agent de nucléation polymère est de 0,0001 à 1,0 % en poids, sur la base du poids total de la composition.

**6.** Composition de polypropylène hétérophasique (HECO) selon l'une des revendications précédentes, comprenant en outre un polyéthylène et/ou un plastomère selon une quantité de 4,0 à 20,0 % en poids, sur la base du poids total de la composition.

**7.** Composition de polypropylène hétérophasique (HECO) selon la revendication 6, dans laquelle le polyéthylène et/ou le plastomère ont une densité dans la plage de 890 à 925 kg/$m^3$ et un $MFR_2$ (2,16 kg, 190 °C) mesuré selon ISO 1133 dans la plage de 1,0 à 100 g/10 min.

**8.** Composition de polypropylène hétérophasique (HECO) selon la revendication 6 ou 7, dans laquelle le polyéthylène et/ou le plastomère est un polyéthylène linéaire basse densité (LLDPE) qui est présent selon une quantité de 5,0 à 15,0 % en poids, sur la base du poids total de la composition, dans laquelle la composition de polypropylène hétérophasique a deux températures de fusion $T_{m1}$ et $T_{m2}$ mesurées par calorimétrie à balayage différentiel (DSC), $T_{m1}$ étant supérieure à 155 °C et $T_{m2}$ étant dans la plage de 60 à 125 °C.

**9.** Composition de polypropylène hétérophasique (HECO) selon l'une des revendications précédentes, dans laquelle le au moins un agent de nucléation polymère comprend un polymère de vinylcyclohexane.

**10.** Composition de polypropylène hétérophasique (HECO) selon l'une des revendications précédentes, dans laquelle l'agent de nucléation polymère est introduit conjointement avec 7,0 à 12,0 % en poids, sur la base du poids total de la composition, d'un polypropylène hétérophasique de type Ziegler-Natta ayant une température de fusion $T_{m3}$ mesurée par calorimétrie à balayage différentiel (DSC) supérieure à 155 °C et un $MFR_2$ (2,16 kg, 230 °C) mesuré selon ISO 1133 dans la plage de 2,0 à 10,0 g/10 min.

**11.** Composition de polypropylène hétérophasique (HECO) selon l'une des revendications précédentes, dans laquelle la composition de polypropylène hétérophasique (HECO) comprend deux agents de nucléation, dans laquelle un agent de nucléation est un polyvinylcyclohexane (PVCH) et le deuxième agent de nucléation est sélectionné parmi le groupe constitué de sels d'acides monocarboxyliques et d'acides polycarboxyliques.

**12.** Composition de polypropylène hétérophasique (HECO) selon l'une des revendications précédentes, dans laquelle la composition de polypropylène hétérophasique (HECO) a un voile mesuré selon ASTM D1033 sur une plaque de 1,0 mm d'épaisseur inférieur à 40 %, une résistance au choc Charpy d'éprouvettes entaillées NIS à +23 °C mesurée selon ISO 179 d'au moins 15 kJ/m2 et un module de flexion mesuré selon ISO 178 d'au moins 1300 MPa.

**13.** Procédé de préparation de la composition de polypropylène hétérophasique (HECO) selon l'une des revendications précédentes, comprenant la polymérisation de propylène en au moins trois étapes de polymérisation en présence d'un catalyseur à site unique (SSC), dans lequel

a) dans le premier réacteur de polymérisation (R1), du propylène est polymérisé pour obtenir une première fraction d'homopolymère de propylène (H-PP1), ladite première fraction d'homopolymère de propylène (H-PP1) est transférée dans un deuxième réacteur de polymérisation (R2),
b) dans le deuxième réacteur de polymérisation (R2), une deuxième fraction d'homopolymère de propylène (H-PP2) est produite, formant, conjointement avec la première fraction d'homopolymère de propylène (H-PP1), l'homopolymère de propylène (H-PP),
c) dans le troisième réacteur de polymérisation, la fraction de caoutchouc élastomère éthylène-propylène (EPR) est produite en présence de l'homopolymère de propylène (H-PP) qui est produit lors des étapes de réaction a) et b), et
d) le au moins un agent de nucléation polymère est introduit

- en tant que lot maître par une étape de malaxage postérieure à l'étape de polymérisation c), ou
- via une étape de prépolymérisation avant la première étape de polymérisation a) dans un réacteur de prépolymérisation (PR) dans lequel l'agent de nucléation polymère est produit et un mélange du catalyseur à site unique (SSC) et de l'agent de nucléation polymère est obtenu, et, après la prépolymérisation, le mélange du catalyseur à site unique (SSC) et de l'agent de nucléation polymère produit dans le réacteur de prépolymérisation (PR) est transféré dans le premier réacteur (R1).

**14.** Article obtenu par extrusion d'une composition de polypropylène hétérophasique (HECO) selon l'une des revendications 1 à 12.

**15.** Article d'emballage comprenant l'article extrudé selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2053086 A1
- WO 2015108634 A1
- EP 3263641 A1
- WO 2013007650 A1
- WO 2018122134 A1
- WO 2013007650 A
- WO 2015158790 A2


### Non-patent literature cited in the description


- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V ; CARBONNIERE, P ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **SINGH, G. ; KOTHARI, A. ; GUPTA, V.** *Polymer Testing,* 2009, vol. 28 (5), 475
- **KAKUGO, M. ; NAITO, Y. ; MIZUNUMA, K. ; MIYATAKE, T.** *Macromolecules,* 1982, vol. 15, 1150
- **RANDALL, J.** *Macromol. Sci., Rev. Macromol. Chem. Phys.,* 1989, vol. C29, 201
- **RESCONI, L. ; CAVALLO, L. ; FAIT, A. ; PIEMONTESI, F.** 100. *Chem. Rev.,* 2000, 1253
- **DEL HIERRO, P. ; ORTIN, A. ; MONRABAL, B.** Soluble Fraction Analysis in polypropylene. The Column Advanstar Publications, February 2014, 18-23
- Polymer Handbook. Wiley, 1989
- *CHEMICAL ABSTRACTS,* 128-37-0
- *CHEMICAL ABSTRACTS,* 38613-77-3